# EUROPÄISCHE PATENTSCHRIFT

(11) **EP 3 582 192 B1**
(45) Veröffentlichungstag und Bekanntmachung des Hinweises auf die Patenterteilung: **24.11.2021**
(21) Anmeldenummer: 19177457.9
(22) Anmeldetag: 29.05.2019
(51) Int. Cl.: G07C 9/00, H04B 5/00

(54) **VERFAHREN ZUR REGELUNG EINES ZUGANGSREGIMES ZU EINEM OBJEKT, SCHLIESSEINHEIT UND SCHLIESSSYSTEM**
METHOD FOR CONTROLLING AN ACCESS REGIME TO AN OBJECT, CLOSING UNIT AND CLOSING SYSTEM
PROCÉDÉ DE RÉGULATION D'UN RÉGIME D'ACCÈS À UN OBJET, UNITÉ DE FERMETURE ET SYSTÈME DE FERMETURE

(30) Priorität: 14.06.2018 DE 102018114253
(43) Veröffentlichungstag der Anmeldung: 18.12.2019
(73) Patentinhaber: dormakaba Schweiz AG, 8623 Wetzikon (CH)
(72) Erfinder: Schwendeler, Stefan, CH 8153 Rümlang, Switzerland (CH); Dütschler, Urs, CH 8153 Rümlang, Switzerland (CH)
(74) Vertreter: Balder IP Law, S.L.

(56) Entgegenhaltungen:
- US-A1- 2001 027 671
- US-A1- 2005 077 995
- US-A1- 2010 073 129
- US-A1- 2017 249 794

## Beschreibung

Die Erfindung betrifft ein Verfahren zur Regelung eines Zugangsregimes zu einem Objekt, wobei dem Objekt ein Versperrelement zuordbar ist, wobei durch das Sperrelement ein Zugang zu dem Objekt in Abhängigkeit von einer Verifikation einer elektronischen Berechtigungsinformation freigebbar ist. Ferner betrifft die Erfindung eine Schließeinheit mit einem Versperrelement, wobei durch das Versperrelement ein Zugang zu einem Objekt, dem das Versperrelement zugeordnet ist, in Abhängigkeit von einer Verifikation einer Berechtigungsinformation freigebbar ist, sowie ein Schließsystem, das eine erfindungsgemäße Schließeinheit enthält.

Verfahren zur Regelung eines Zugangsregimes zu einem Objekt sind bekannt. So offenbart die WO 2010/ 111 796 A1 ein als Schließzylinder ausgebildetes Versperrelement. Ein elektronischer Schlüssel ist in das Versperrelement einsteckbar. Der Schlüssel umfasst eine Steuerschaltung, in der eine Berechtigungsinformation gespeichert ist. Nach dem Einstecken des Schlüssels wird die Berechtigungsinformation auf den Schließzylinder übertragen. Verifiziert der Schließzylinder die Berechtigungsinformation, so ermöglicht der Schließzylinder anschließend mittels eines Elektromotors den Zugang zu dem Objekt. Nachteilig hieran ist, dass die Berechtigungsinformation auf dem Schlüssel schwierig zu aktualisieren ist. Somit ist das Verfahren wenig geeignet für Fälle, in denen Zugangsberechtigungen besonders variabel vergeben werden sollen. Für territorial weit verteilte Objekte und/oder in Fällen, in denen nur in sehr großen zeitlichen Abständen Zugang zu dem Objekt benötigt wird, ist oft damit zu rechnen, dass ein Schlüssel verloren geht oder nicht klar ist, wo oder durch wen der Schlüssel verwahrt oder verwaltet wird.

Die US 2010/0073129 A1 offenbart ein Verfahren, bei dem zunächst eine Kommunikationsvorrichtung mit einem Schloss kabellos Daten austauscht. Anschließend erzeugt ein Generator Energie durch Einstecken eines Schlüssels in ein Schloss, um einen Aktuator zu betreiben.

Die US 2017/0249794 A1 offenbart, dass ein Schlüssel mit einer Berechtigungsinformation nur dann eine Entsperrung einleitet, wenn dem Schlüssel ein Aktivierungssignal vorliegt. Dieses Aktivierungssignal kann von einer mobile Vorrichtung generiert werden.

Es ist die Aufgabe der Erfindung, ein Verfahren zur Regelung eines Zugangsregimes zu einem Objekt, eine Schließeinheit und ein Schließsystem zur Verfügung zu stellen, das alternativ ausgebildet ist. Insbesondere soll auf einfachere Weise ein aktualisierte Berechtigungsinformation zur Verfügung gestellt werden. Alternativ oder zusätzlich sollen insbesondere die Konsequenzen eines Verlust eines Schlüssels abgemildert werden. Alternativ oder zusätzlich soll die Erfindung eine Lösung bieten für territorial weit verteilte Objekte und/oder wenn nur in sehr großen zeitlichen Abständen Zugang zu dem Objekt benötigt wird.

Die Aufgabe wird gelöst durch den unabhängigen Anspruch 1. Vorteilhafte Weiterbildungen des Verfahrens sind in den abhängigen Verfahrensansprüchen, der Beschreibung und in den Figuren angegeben. Ferner wird die Aufgabe auch durch die Merkmale der erfindungsgemäßen Schließeinheit gemäß dem unabhängigen Anspruch 14 gelöst. Merkmale und Details, die in Zusammenhang mit der erfindungsgemäßen Schließeinheit beschrieben sind, gelten dabei auch in Zusammenhang mit dem erfindungsgemäßen Verfahren und umgekehrt. Dabei können die in der Beschreibung und in den Ansprüchen erwähnten Merkmale jeweils einzeln für sich oder in Kombination erfindungswesentlich sein. Insbesondere wird eine Schließeinheit unter Schutz gestellt, mit der das erfindungsgemäße Verfahren, insbesondere das Verfahren nach einem der Ansprüche 1 bis 13, ausführbar ist, wie auch ein Verfahren, das mit der erfindungsgemäßen Schließeinheit, insbesondere mit einer Schließeinheit nach Anspruch 14, ausgeführt werden kann. Ebenfalls wird ein Schließsystem nach Anspruch 15 unter Schutz gestellt. Das erfindungsgemäße Schließsystem kann die erfindungsgemäße Schließeinheit umfassen. Auch wird ein Schließsystem unter Schutz gestellt, mit dem das erfindungsgemäße Verfahren, insbesondere das Verfahren nach einem der Ansprüche 1 bis 13, ausführbar ist.

Erfindungsgemäß ist vorgesehen, dass eine Voraussetzung für die Freigabe des Zugangs, insbesondere das Durchführen der Verifikation der elektronischen Berechtigungsinformation, ein Zugegensein eines generischen mobilen Elementes am Ort des Versperrelementes ist.

Hierbei kann die Berechtigungsinformation in einem Berechtigungsträgerelement enthalten sein, wobei das Berechtigungsträgerelement zusätzlich zu dem Versperrelement und dem generischen mobilen Element am Ort des Versperrelementes zugegen ist. Zusätzlich oder alternativ kann vorgesehen sein, dass das generische mobile Element die Berechtigungsinformation in einem Zeitraum, der vor dem Zugegensein des generischen mobilen Elementes am Ort des Versperrelementes liegt und an das Zugegensein des generischen mobilen Elementes am Ort des Versperrelementes angrenzt, nicht enthält.

Der erfindungsgemäße Gedanke dabei ist, dass das generische mobile Element nicht der Träger der elektronischen Berechtigungsinformation zu dem Ort, zu dem Zugang begehrt wird, ist. Das generische mobile Element kann insbesondere als generisch angesehen werden, weil das generische mobile Element nicht von vornherein schon mit der Berechtigungsinformation versehen ist. Somit entfällt die Notwendigkeit, das generische mobile Element zu aktualisieren. Vielmehr wird die Berechtigungsinformation anderweitig, insbesondere durch das Berechtigungsträgerelement, zu dem Ort, zu dem Zugang begehrt wird, befördert. Ein Verlust des generischen mobilen Elements bedeutet somit kein oder nur ein sehr geringes Risiko für das Objekt, das durch das erfindungsgemäße Verfahren gesichert ist. Das "Nicht-Enthalten" der Berechtigungsinformation kann auch so ausgedrückt werden, dass die Berechtigungsinformation in dem generischen mobilen Element abwesend ist oder dass das generische mobile Element frei ist von der Berechtigungsinformation.

Das generische mobile Element zeichnet sich insbesondere dadurch aus, dass das generische mobile Element vor Ort sein muss, damit eine Freigabe erwirkt werden kann, wobei jedoch das generische mobile Element die Berechtigungsinformation vorher nicht enthält, sondern höchstens vor Ort, wenn überhaupt.

In dem Verfahren kann überprüft werden, ob das generische mobile Element vor Ort ist. Insbesondere kann das Versperrelment überprüfen, ob das generische mobile Element vor Ort ist. Hierzu kann das Versperrelement eine Prüfeinheit umfassen. Um sicherzustellen, dass das generische mobile Element vor Ort zugegen ist, kann beispielsweise explizit überprüft werden, ob das generische mobile Element vor Ort zugegen ist, und/oder das Zugegensein des generischen mobilen Elementes vor Ort kann implizit überprüft werden, z.B. dadurch, dass es eine notwendige Voraussetzung für einen oder mehrere Schritte des Verfahrens ist. Es kann z.B. sichergestellt oder explizit überprüft werden, dass das generische mobile Element mit dem Versperrelement oder einem anderen Element des Schliessystems in Kontakt tritt, d. h. eine Wirkverbindung aufbaut.

In dem Verfahren kann überprüft werden, ob das Berechtigungsträgerelement vor Ort ist. Insbesondere kann das Versperrelment überprüfen, ob das Berechtigungsträgerelement vor Ort ist. Hierzu kann das Versperrelement die Prüfeinheit verwenden. Um sicherzustellen, dass das Berechtigungsträgerelement vor Ort zugegen ist, kann beispielsweise explizit überprüft werden, ob das Berechtigungsträgerelement vor Ort zugegen ist, und/oder das Zugegensein des Berechtigungsträgerelements vor Ort kann implizit überprüft werden, z.B. dadurch, dass es eine notwendige Voraussetzung für einen oder mehrere Schritte des Verfahrens ist. Insbesondere kann das Stattfinden einer insbesondere kabellosen Kommunikation, insbesondere der Nahfeldkommunikation, zwischen dem Versperrelement und dem Berechtigungsträgerelement als Nachweis dazu dienen, dass das Berechtigungsträgerelement vor Ort ist.

Das generische mobile Element ist insbesondere dazu vorgesehen, von einem sich den Zugang wünschenden Benutzer mitgeführt zu werden und/oder von dem sich den Zugang wünschenden Benutzer zu dem Versperrelement transportiert zu werden. Der Aufenthaltsort des generischen mobilen Elements ist insbesondere unabhängig vom Ort des Objekts und/oder vom Ort des Versperrelements. Der Begriff «mobil» schließt hierbei nicht aus, dass das generische mobile Element stets nahe dem Objekt aufbewahrt werden kann, wie es z. B. im Falle von in einer Bank aufzubewahrenden generischen mobile Element für Bankschließfächer der Fall sein kann.

Bevorzugt ist das generische mobile Element frei von einem mechanischen Berechtigungscode, insbesondere von einem Schlüsselschaft mit einer mechanischen Codierung, wie z. B. Schlüsselkerben oder Schlüsselzinken. Unter einem mechanischen Berechtigungscode wird hierbei ein mechanischer Berechtigungscode verstanden, der für eine geringe Anzahl von Versperrelementen, insbesondere nur für ein Versperrelement, den Zugang freigibt.

Das Berechtigungsträgerelement ist insbesondere dazu vorgesehen, von einem sich den Zugang wünschenden Benutzer mitgeführt zu werden und/oder von dem sich den Zugang wünschenden Benutzer zu dem Versperrelement transportiert zu werden. Das Berechtigungsträgerelement kann insbesondere mobil ausgebildet sein. Das Berechtigungsträgerelement kann z. B. als ein Mobiltelefon, als ein mobiler Computer, als ein Tablet, als ein Laptop, als ein Notebook, als ein Wearable oder ähnliches ausgebildet sein. Alternativ kann das Berechtigungsträgerelement als ein Implantat ausgebildet sein. Insbesondere kann das Berechtigungsträgerelement mobilfunkfähig ausgebildet sein.

Das generische mobile Element und das Berechtigungsträgerelement sind insbesondere separat, d. h. ohne mechanische Verbindung, zueinander ausgeführt.

Das Berechtigungsträgerelement kann z. B. einen Prozessor enthalten. Das Berechtigungsträgerelement kann insbesondere einen Speicher, insbesondere einen nicht flüchtigen Speicher, enthalten. In dem Speicher kann die Berechtigungsinformation gespeichert sein. Die Berechtigungsinformation kann z. B. als ein Datensatz, insbesondere eine Datei, ausgebildet sein. Das Berechtigungsträgerelement kann einen elektrochemischen Energiespeicher umfassen.

Das Berechtigungsträgerelement umfasst insbesondere eine Sende- und/oder Empfangseinheit zur Kommunikation mit einem Server, z. B. einer Cloud, zum Empfang der Berechtigungsinformation. Die Sende- und/oder Empfangseinheit dient insbesondere zur kabellosen Kommunikation. Z. B. kann die Kommunikation über ein Telekommunikationsnetz erfolgen. Alternativ kann eine Kommunikation über ein Nahfeld erfolgen. Eine Kommunikation mit dem Server zur Übermittlung der Berechtigungsinformation kann erfolgen, bevor der Berechtigungsträger am Ort des Versperrelements zugegen ist, insbesondere bevor das Berechtigungsträgerelement mit dem Versperrelement kommuniziert. Dieses ermöglicht den Einsatz auch dort, wo das Berechtigungsträgerelement keine Verbindung zu dem Telekommunikationnetz hat. Alternativ kann die Kommunikation mit dem Server zur Übermittlung der Berechtigungsinformation erfolgen, wenn das Berechtigungsträgerelement am Ort des Versperrelementes zugegen ist, insbesondere wenn eine Kommunikation zwischen dem Berechtigungsträgerelement und dem Versperrelement bereits begonnen hat.

Das Berechtigungsträgerelement umfasst insbesondere eine Sende- und/oder Empfangseinheit zur Kommunikation mit dem Versperrelement. Die Kommunikation mit dem Versperrelement kann insbesondere eine kabellose Nahfeldkommunikation sein. Beispielsweise können das Berechtigungsträgerelement und das Versperrelement über RFID oder BLE miteinander kommunizieren.

Als Regelung zu einem Zugangsregime wird ein Verfahren verstanden, bei dem ermittelt wird, ob Zugang zu dem Ort für einen Benutzer freigegeben werden soll oder nicht. Hierzu wird die Berechtigungsinformation überprüft. Ergibt die Überprüfung, dass gemäß der Berechtigungsinformation der Zugang erlaubt ist, so wird der Zugang freigegeben. Die Berechtigungsinformation ist in diesem Fall verifiziert. Ergibt die Überprüfung, dass gemäß der Berechtigungsinformation der Zugang verboten ist, so bleibt der Zugang verwehrt. Unter «Durchführung der Verifikation der Berechtigungsinformation» wird verstanden, dass das Versperrelement und das Berechtigungsrägerelement miteinander kommunizieren und Überprüfung der Berechtigungsinformation stattfindet.

Die elektronische Berechtigungsinformation kann als ein spezifisches Geheimnis angesehen werden. Die Berechtigungsträgerinformation ist insbesondere spezifisch für ein Versperrelement. Die elektronische Berechtigungsinformation liegt insbesondere veschlüsselt in dem Berechtigungsträgerelement vor. Es kann sein, dass das Versperrelement, nicht jedoch das Berechtigungsträgerelement die Berechtigungsinformation entschlüsseln kann.

Die elektronische Berechtigungsinformation kann z. B. einen Code und/oder einen Gültigkeitszeitraum, in dem der Zugang freizugeben ist, umfassen. Bevorzugt wird zumindest ein Teil der elektronischen Berechtigungsinformation in dem Versperrelement überprüft. Insbesondere wird zuvor zumindest der zu prüfende Teil der elektronischen Berechtigungsinformation auf das Versperrelement übertragen. Die Übertragung findet insbesondere im Rahmen der aktuellen Überprüfung statt. Zur Übertragung kommuniziert das Versperrelement, insbesondere eine elektronische Schaltung des Versperrelements, mit dem Berechtigungsträgerelement. Das Versperrelement kann auch die gesamte Berechtigungsinformation, insbesondere den Code und den Gültigkeitszeitraum, überprüfen.

Das Versperrelement kann eine elektronische Schaltung, insbesondere einen Kontroller oder einen Prozessor, umfassen. Das Versperrelement kann einen Speicher, insbesondere einen nicht-flüchtigen Speicher, umfassen. Das Versperrelement kann die Überprüfung der übertragenen Berechtigungsinformation oder des übertragenen Teils der Berechtigungsinformation mittels der elektronischen Schaltung vornehmen. In dem Speicher des Versperrelements kann eine Information zumindest temporär gespeichert sein, mittels der die Berechtigungsinformation verifizierbar ist. Die elektronische Schaltung kann als Prüfeinheit dienen.

Bevorzugt ist das Versperrelement als ein offlline-Versperrelement ausgebildet. So kann das Versperrelement, wenn kein Benutzer zugegen ist, nicht mit dem Server kommunizieren. Anders ausgedrückt, fehlt eine festinstallierte Kommunikationsverbindung zwischen dem Versperrelement und dem Server. Insbesondere ist das Versperrelement nicht mobilfunkfähig. Das Versperrelement kann z. B. über ein Mobilfunkgerät, insbesondere über das Berechtigungsträgerelement, Informationen von dem Server erhalten. Das Versperrelement kann z. B. über ein Mobilfunkgerät, insbesondere über das Berechtigungsträgerelement, Informationen an den Server übermitteln.

Das Objekt ist ein physisches Objekt. Das Objekt ist bevorzugt durch eine Tür versperrt. Die Tür kann z. B. als Gebäudetür, als Schrankür, als Gatter, als Deckel oder als Klappe ausgebildet sein. Die Gebäudetür kann als eine Drehtür, eine Schiebetür oder als eine Karusselltür ausgebildet sein.

Das Objekt ist insbesondere feststehend. Das Objekt kann als Raum oder als Box ausgebildet sein. Beispielsweise kann es sich bei dem Objekt um eine durch eine Tür versperrter Raum handeln. Alternativ kann das Objekt als eine versperrte Box, insbesondere eine Postbox, als ein Schließfach, als ein Außenbereich oder als ein durch eine Schranke behinderter Bereich, z. B. Parkbereich, ausgebildet sein.

Das Versperrelement ist dem Objekt zugeordnet. Ein Benutzer wird insbesondere die Zugangskontrolleinheit dem Objekt zuordnen. Das Versperrelement dient als insbesondere festinstallierter Wächter zu dem Objekt. Das Versperrelement ist zu dem zu sicherenden Objekt stationär angeordnet. Das Versperrelement ist bevorzugt zur Anordnung nahe dem Objekt vorgesehen.

Das Versperrelement kann einen elektrischen Aktuator, insbesondere eine elektromechanische Vorrichtung, z. B. einen Elektromotor oder ein Solenoid, oder eine elektromagnetische Vorrichtung, umfassen. Mittels des Aktuators kann der Benutzer Zugang zu dem Objekt erlangen. Der elektrische Aktuator wird insbesondere von der elektronischen Schaltung des Versperrelements gesteuert.

Das Versperrelement kann ein Entriegelungselement umfassen. Eine Betätigung des Entriegelungselements dient zur Entriegelung der Tür. Ist die Tür entriegelt, so befindet sich das Entriegelungselement in einer Entriegelungsposition. Z. B. kann durch die Entriegelung der Tür die Tür öffenbar gemacht. Hierbei kann z. B. unter einer Entriegelung einer Tür insbesondere das Zurückziehen einer Falle und/oder eines Riegels eines Schlosses verstanden werden.

Der elektrische Aktuator kann als Teil einer Kupplungseinheit zur Herstellung einer Wirkverbindung mit dem Entriegelungselement ausgebildet sein. Alternativ kann der Aktuator als Teil einer Sperreinheit zur Sperrung der Bewegbarkeit des Entriegelungselements ausgebildet sein.

Beispielsweise kann das Versperrelement mittels des elektrischen Aktuators eine Betätigung einer Falle oder eines Riegels des Schlosses ermöglichen, falls die Berechtigungsinformation verifiziert wurde. Das Versperrelement kann in diesem Fall insbesondere als ein elektromechanischer Beschlag oder als ein elektromechanischer Schließzylinder ausgebildet sein. Das Entriegelungselement ist insbesondere dazu ausgebildet, mit dem Schloss zusammenzuwirken. So kann das Entriegelungselement dazu vorgesehen sein, in dem Schloss angeordnet zu werden. Ist das Versperelement als ein Schließzylinder ausgebildet, so kann das Entriegelungselement z. B. als eine Schließnase des Schließzylinders ausgebildet sein. Ist das Versperrelement als eine Beschlag ausgebildet, so kann das Entriegelungselement als ein Übertragungselement, das in einer Nuss eines Schlosses anordnbar ist, insbesondere als ein Vierkant, ausgebildet sein.

Alternativ kann das Versperrelement als Drehriegelschloss ausgebildet sein. Entspricht das Versperrelement einem Drehriegelschloss, so kann das Entriegelungselement selber als Riegel wirken und/oder selber zum Sperren der Tür ausgebildet sein.

In einer weiteren Alternative kann das Versperrelement als Vorhängeschloss ausgebildet sein. In diesem Fall dient das Entriegelungselement zum Sperren eines Bügels des Vorhängeschlosses.

Das Versperrelement kann einen rotierbaren Zylinderkern umfassen. Beispielsweise kann die elektronische Schaltung in dem rotierbaren Zylinderkern vorgesehen sein.

Das Versperrelement kann ein erstes mechanisches Verbindungsmittel umfassen. Das generische mobile Element kann ein dazu korrespondierendes zweites mechanisches Verbindungsmittel umfassen. Hierdurch kann eine mechanische Verbindung zwischen dem Versperrelement und dem mobilen Element eingehbar sein. Das Eingehen der mechanischen Verbindung kann auch als ein mechanisches Miteinander-in-Kontakt-Treten des Versperrelements und des generischen mobilen Elements bezeichnet werden. Mittels der mechanischen Verbindung zwischen dem generischen mobilen Element und dem Versperrelement kann insbesondere das Entriegelungselement in die Entriegelungsposition bewegbar sein.

Das erste mechanische Verbindungsmittel kann als ein erstes Formschlussmittel ausgebildet sein. Das zweite mechanischen Verbindungsmittel kann als ein zweites Formschlussmittel ausgebildet sein. Die mechanische Verbindung zwischen dem generischen mobilen Element und dem Versperrelement kann als ein Formschluss ausgebildet sein. Z. B. kann das generische mobile Element eine Aufnahme umfassen, die einen Vorsprung des generischen mobilen Elements aufnehmen kann. Alternativ kann das generische mobile Element eine Aufnahme umfassen, die einen Vorsprung des Versperrelements aufnehmen kann.

Die mechanische Verbindung, insbesondere der Formschluss, zwischen dem generischen mobilen Element und dem Versperrelement ist insbesondere werkzeugfrei herstellbar und/oder lösbar. Insbesondere kann es sich um eine Steckverbindung oder einen Bajonettverschluss handeln.

Nach der Verifikation der Berechtigungsinformation wird insbesondere ermöglicht, dass das generische mobile Element das Entriegelungselement bewegen kann, wenn das generische mobile Element und das Versperrelement miteinander mechanisch verbunden sind und der Aktuator die Bewegung des Versperrelements durch das mobile Element ermöglicht hat. Somit dient das generische mobile Element als ein mobiler Knauf oder als ein mobiler Türdrücker. Durch das generische mobile Element kann insbesondere ein Drehmoment auf das Entriegelungselement ausgeübt werden. Der Benutzer kann durch eine Betätigung des generischen mobilen Elements ein Drehmoment erzeugen, durch das das Entriegelungselement nach der Verifikation der Berechtigungsinformation bewegt wird. Somit wird mittels des generischen mobilen Elements mechanische Arbeit zum Entriegeln der Tür bereitgestellt. Das generische mobile Element kann als ein Kraftübertragungselement für die Übertragung einer von dem Benutzer ausgeübten Kraft auf das Versperrelement dienen. Zum Beispiel kann das generische mobile Element der Übertragung eines Drehmomentes dienen. Auf diese Weise kann die Kraft, die ein Zugänglichmachen erfordert, von einem Benutzer aufgebracht werden.

Ist die mechanische Verbindung zwischen dem generischen mobilen Element und dem Versperrelement hergestellt, so kann der elektrische Aktuator eine mechanische Wirkverbindung zwischen dem generischen mobilen Element und dem Entriegelungselement des Versperrelements herstellen, um die Bewegung des Entriegelungselements durch das generische mobile Element zu ermöglichen. Der elektrische Aktuator dient in diesem Fall Teil der Kupplungseinheit. Alternativ kann der elektrische Aktuator eine Bewegung des Entriegelungselement durch das generische mobile Element freigegeben, um die Bewegung des Entriegelungselements durch das generische mobile Element zu ermöglichen. Der elektrische Aktuator dient in diesem Fall als Teil der Sperreinheit. Somit kann der Aktuator die Bewegung des Versperrelements durch das mobile Element durch eine Einkupplung oder durch eine Entsperrung ermöglichen.

Ist der elektrische Aktuator Teil der Sperreinheit, so sind insbesondere das erste mechanische Verbindungsmittel und das Entriegelungselement miteinander fest, insbesondere drehfest, verbunden. Ist der elektrische Aktuator Teil der Kupplungseinheit, so sind das erste mechanische Verbindungsmittel und das Entriegelungselement miteinander drehfest durch den elektrischen Akuator verbindbar. Zur Herstellung der drehfesten Verbindung kann der elektrische Aktuator das erste mechanische Verbindungsmittel und das Entriegelungselement miteinander kuppeln.

Das Herstellen der mechanischen Verbindung zwischen dem ersten und dem zweiten mechanischen Verbindungsmittel erfolgt insbesondere, ohne dass ein Sperrstift, der eine Beweglichkeit des ersten Verbindungsmittel und/oder des Entriegelungselements verhindert, bewegt wird. Zusätzlich oder alternativ kann das Herstellen der Wirkverbindung zwischen dem ersten und dem zweiten mechanischen Verbindungsmittel einflussfrei auf eine Beweglichkeit des ersten mechanischen Verbindungsmittels sein. Wesentlich dabei kann sein, dass auf eine mechanische Codierung am generischen mobilen Element verzichtet ist. So umfasst das Versperrelement bevorzugt keine Sperrstifte, die durch das Herstellen der mechanischen Verbindung zwischen dem generischen mobilen Element und dem Versperrelement, insbesondere durch das Einstecken des generischen mobilen Elements in das Versperrelement, in eine Stellung bewegt werden, die eine Bewegung des Entriegelungselements ermöglichen.

Das generische mobile Element kann eine elektrische Energiequelle aufweisen. Die elektrische Energiequelle kann z. B. als zumindest eine Batterie oder als zumindest ein Akkumulator ausgebildet sein. Das Versperrelement kann durch das generische mobile Element mit Energie aus der Energiequelle versorgt werden. So kann ein Zugegensein des generischen mobilen Elementes am Ort des Versperrelementes als Voraussetzung für die Freigabe des Zugangs, insbesondere für die Verifikation der Berechtigungsinformation, dadurch gepüft werden, dass das Versperrelement, insbesondere die elektronische Schaltung, durch das generische mobile Element mit Energie versorgt wird.

Die elektrische Energiequelle stellt insbesondere dem Versperrelement ausreichende Energie zur Durchführung der Verifikation der Berechtigungsinformation zur Verfügung. Die elektrische Energiequelle stellt insbesondere dem Versperrelement ausreichende Energie zur Kommunikation mit dem Berechtigungsinformationsträger zur Übertragung der Berechtigungsinformation zur Verfügung. Die elektrische Energiequelle stellt insbesondere dem Versperrelement ausreichende Energie zur Überprüfung der Berechtigungsinformation zur Verfügung. Zusätzlich oder alternativ stellt die elektrische Energiequelle Energie zum Bestromen des Aktuator, damit der Aktuator die Bewegung des Entriegelungselements durch das generische mobile Element ermöglichen kann, zur Verfügung. Insbesondere stellt die elektrische Energiequelle hierzu Energie für den elektrischen Aktuator zur Verfügung, um das generische mobile Element mit dem Entriegelungselement wirkzuverbinden oder um das Entriegelungselement zu entsperren. Nachdem durch die elektrische Energie des generischen mobilen Elements die Bewegung des Entriegelungselements durch das generische mobile Element ermöglicht wurde, wird bevorzugt über das generische mobile Element mechanische Arbeit geleistet, um das Entriegelungselement zu bewegen.

Das generische mobile Element kann ein Gehäuse umfassen. Bevorzugt ist die Energiequelle in dem Gehäuse angeordnet. Besonders bevorzugt ist das Gehäuse offenbar. Das Gehäuse kann hierzu Deckel umfassen. Der Deckel kann abnehmbar oder abklappbar ausgebildet sein. Hierdurch ist ein Austausch der Energiequelle möglich. Das Gehäuse schützt die Energiequelle vor äußeren Einflüssen.

Das generische mobile Element kann ein Fach zur Aufnahme der Energiequelle umfassen. Das Fach umfasst insbesondere elektrische Kontakte zum elektrischen Kontaktieren der Energiequelle. Hierbei kann zumindest ein elektrischer Kontakt federnd an der Energiequelle anliegen.

Insbesondere wird das Zugegensein des generischen mobilen Elementes am Ort des Versperrelementes dadurch sichergestellt, dass das generische mobile Element und das Versperrelement miteinander in Kontakt treten, also eine Wirkverbindung herstellen.

Bevorzugt ist vorgesehen, dass eine Voraussetzung für die Freigabe des Zugangs, insbesondere für das Durchführen der Verifikation der Berechtigungsinformation, ein Miteinander-in-Kontakt-Treten des Versperrelementes mit dem generischen mobilen Element ist. Besonders bevorzugt ist vorgesehen, dass das generische mobile Element die Berechtigungsinformation vor dem Miteinander-in-Kontakt-Treten des Versperrelementes mit dem generischen mobilen Element nicht enthält.

Das Miteinander-in-Kontakt-Treten kann beispielsweise das Bewirken der mechanischen Verbindung und/oder das Erstellen einer elektrischen Wirkverbindung beinhalten. Der mechanische Kontakt kann z.B. durch ein Einstecken des generischen mobilen Elementes in eine Buchse des Versperrelementes bewirkt werden, wodurch möglicherweise auch eine Übertragung eines Drehmomentes vom generischen mobilen Element auf einen drehbaren Teil des Versperrelementes bewirkt werden kann. Alternativ oder zusätzlich kann eine elektrische Wirkverbindung hergestellt werden. Alternativ oder zusätzlich kann eine Kommunikationsverbindung, ein drahtloser oder auch drahtgebundener elektronischer Kontakt, hergestellt werden und anhand dessen sichergestellt werden, dass das generische mobile Element und das Versperrelement miteinander in Kontakt getreten sind.

Das erfindungsgemäße Verfahren kann die folgenden Schritte umfassen:
a. Miteinander-in-Kontakt-Treten, insbesondere elektrisches und mechanisches Miteinander-in-Kontakt-Treten, des Versperrelements mit dem generischen mobilen Element
b. anschließende Durchführung der Verifikation der Berechtigungsinformation, wozu eine bevorzugt kabellose Kommunikation zwischen dem Versperrelement und dem Berechtigungsträgerelement stattfindet.

In Schritt a. umfasst das Miteinander-in-Kontakt-Treten insbesondere zumindest ein mechanisches Miteinander-in-Kontakt-Treten. Besonders bevorzugt treten das Versperrelement und das generische mobile Element elektrisch und mechanisch miteinander in Kontakt.

Durch das Miteinander-in-Kontakt-Treten des Versperrelements mit dem generischen mobilen Element, insbesondere durch das elektrische Miteinander-in-Kontakt-Treten, d. h. durch den Aufbau einer elektrischen Wirkverbindung, beginnt das generische Element insbesondere das Versperrelement mit elektrischer Energie zu versorgen. Insbesondere wird durch das elektrische Miteinander-in-Kontakt-Treten die elektronische Schaltung mit Energie versorgt. Hierdurch kann die elektronische Schaltung aufgeweckt oder eingeschaltet werden. Besonders bevorzugt kann die elektronische Schaltung hierdurch eingeschaltet werden. Bevorzugt fängt nach dem Einschalten die elektronische Schaltung die Kommunikation mit dem Berechtigungsträgerelement an. Besonders bevorzugt ist die elektronische Schaltung ausgeschaltet, sofern das generische mobile Element und die elektronische Schaltung getrennt sind.

Das Versperrelement kann eine erste Energieübertragungseinrichtung zur elektrischen Energieübertragung von dem generischen mobilen Element umfassen. Das generische mobile Element kann eine dazu korrespondierendes zweite Energieübertragungseinrichtung zur Übertragung von elektrischer Energie auf das Versperrelement umfassen.

Die erste Energieübertragungseinrichtung kann insbesondere als zumindest ein erstes Kontaktelement ausgebildet sein. Die zweite Energieübertragungseinrichtung kann als zumindest ein zweites Kontaktelement ausgebildet sein. Das erste Kontaktmittel kann sich an dem ersten Formschlussmittel befinden. Das zweite Kontaktmittel kann sich an dem zweiten Formschlussmittel befinden. Z. B. kann das generische mobile Element mit dem elektrischen Miteinander-in-Kontakt-Treten einen Stromkreis schließen, durch das die elektronische Schaltung mit elektrischer Energie versorgt wird. Die Energiequelle des generischen mobilen Elements kann Teil des Stromkreises sein.

Alternativ können die erste und die zweite Energieübertragungsvorrichtung induktiv Energie von dem generischen mobilen Element auf das Versperrelement übertragen. Hierzu kann die erste Energieübertragungsvorrichtung zumindest eine erste Spule umfassen. Hierzu kann die zweite Energieübertragungsvorrichtung zumindest eine zweite Spule umfassen.

Damit der elektrische Aktuator bestromt wird, so dass der elektrische Akuator das generische mobile Element mit dem Entriegelungselement wirkverbindet oder das Entriegelungselement entsperrt, genügt ein Berühren der Kontaktelemente nicht. Vielmehr muss zuvor die elektronische Schaltung den Energiefluss zum elektrischen Aktuator veranlassen, nachdem die Berechtigungsinformation verifiziert wurde.

Es kann sein, dass für den Fall, dass über die erste Energieübertragungseinrichtung des Versperrelements kein elektrischer Strom fließt, das Versperrelement jegliche Kommunikation zur Durchführung der Verifikation der Berechtigungsinformation unterlässt. Insbesondere unterlässt das Versperrelement die Aussendung eines Detektionssignals. Besonders bevorzugt verbraucht die elektronische Schaltung keinen elektrischen Strom, wenn über die erste Energieübertragungseinrichtung des Versperrelements kein elektrischer Strom fließt. Die elektronische Schaltung ist dann ausgeschaltet. Ebenfalls kann es sein, dass der elektrische Aktuator keinen elektrischen Strom verbraucht, wenn über die erste Energieübertragungseinrichtung des Versperrelements kein elektrischer Strom fließt. Es ist möglich, dass das Versperrelement keinen elektrischen Strom verbraucht, wenn über die erste Energieübertragungseinrichtung des Versperrelements kein elektrischer Strom fließt.

Es kann sein, dass, wenn über die erste Energieübertragungseinrichtung des Versperrelements kein elektrischer Strom fließt, das Versperrelement frei von einer Kenntnis einer aktuellen Uhrzeit ist. Es kann sein, dass während über die erste Energieübertragungseinrichtung des Versperrelements kein elektrischer Strom fließt, in dem Versperrelement keine Messung und/oder Aktualisierung einer Uhrzeit stattfindet.

Es kann sein, dass in dem Berechtigungsträgerelement ein Teil der Berechtigungsinformation überprüft wird.

Es kann sein, dass das Versperrelement einen Code der Berechtigungsinformation überprüft. Es kann sein, dass ein Gültigkeitszeitraum der Berechtigungsinformation in dem Berechtigungsträgerelement überprüft wird. Dieses kann insbesondere vorgesehen sein, wenn dem Versperrelement keine aktualisierte Uhrzeit zur Verfügung steht. Das Ergebnis der Überprüfung des Gültigkeitzeitraums teilt das Berechtigungsträgerelement dem Versperrelement mit. Nur wenn die Überprüfung des Gültigkeitszeitraums positiv ausgefallen ist und das Versperrelment den Code verfiziert hat, wird der elektrische Aktuator angesteuert, um zu ermöglichen, dass eine Betätigung des generischen mobilen Elements das Entriegelungselement bewegt.

Es ist denkbar, dass das Versperrelement die Prüfeinheit aufweist, um zu überprüfen, ob das generische mobile Element am Ort des Versperrelements zugegen ist. Insbesondere entspricht die elektronische Schaltung der Prüfeinheit. Die Prüfung erfolgt insbesondere dadurch, dass die elektronische Schaltung mit elektrischer Energie des generischen mobilen Elements versorgt wird, insbesondere dass die elektronische Schaltung durch ein In-Kontakt-Treten des Versperrelements mit dem generischen mobilen Element eingeschaltet wird.

Es kann sein, dass die Kommunikation zwischen dem Versperrelement und dem Berechtigungsträgerelement zur der Verifikation der Berechtigungsinformation ohne Einbeziehung des generischen mobilen Elements erfolgt. Die Kommunikation zwischen dem Versperrelement und dem Berechtigungsträgerelement zur der Verifikation der Berechtigungsinformation erfolgt insbesondere unmittelbar. Insbesondere enthält das generische mobile Element die Berechtigungsinformation niemals. In einem solchen Fall kann das Berechtigungsträgerelement mit dem Versperrelement zusammenwirken, ohne dass die Berechtigungsinformation in das generische mobile Element gelangt. In diesem Fall dient das generische mobile Element insbesondere nur zum Verfügung Stellen von elektrischer Energie mittels der Energiequelle und/oder als Überträger von mechanischer Arbeit zur Bewegung des Entriegelungselements. In diesem Fall kann das generische mobile Element frei von einer Antenne zur Kommunikation mit dem Berechtigungsträgerelement und/oder dem Versperrelement ausgebildet sein. Bevorzugt ist das generische mobile Element frei von einer RFID- oder BLE-fähigen Antenne ausgebildet. Besonders bevorzugt ist das generische mobile Element frei von einer Antenne ausgebildet. Über die erste Energieübertragungsvorrichtung, insbesondere über die ersten Kontaktelemente, werden in diesem Fall bevorzugt keine Daten, insbesondere keine Berechtigungsinformation, übertragen. Das Versperrelement kann eine Antenne zur Kommunikation mit dem Berechtigungsträgerelment umfassen.

Alternativ erfolgt die Kommunikation zwischen dem Versperrelement und dem Berechtigungsträgerelement zur Durchführung der Verifikation der Berechtigungsinformation unter Benutzung des generischen mobilen Elements als Überträger. Insbesondere erfolgt die Kommunikation zwischen dem Versperrelement und dem Berechtigungsträgerelement zur Durchführung der Verifikation der Berechtigungsinformation unter Benutzung des generischen mobilen Elements nur als Überträger. Eine Kommunikation zwischen dem Berechtigungsträgerelement und dem Versperrelement kann via dem generische mobile Element stattfinden. Z.B. kann in diesem Fall in dem generischen mobilen Element ein Empfangen, insbesondere drahtloses Empfangen, von Daten (z.B. der Berechtigungsinformation), die von dem Berechtigungsträgerelement ausgesendet werden, stattfinden sowie ein beispielsweise drahtgebundenes oder drahtloses Übertragen der so empfangenen Daten vom generischen mobilen Element an das Versperrelement. Bevorzugt erfolgt keine Speicherung der Berechtigungsinformation in dem generischen mobilen Element. So kann das generische mobile Element eine Antenne umfassen, über die die elektronische Schaltung des Versperrelements mit dem Berechtigungsträgerelement kommuniziert. Insbesondere kann hierbei das Versperrelement frei von einer Antenne zur Kommunikation mit dem Berechtigungsträgerelement ausgebildet sein. Das Versperrelement kann frei von einer RFID- oder BLE-fähigen Antenne ausgebildet sein. Z. B. kann das Versperrelement anntenenfrei ausgebildet sein.

Es ist denkbar, dass die erste Energieübertragungseinrichtung, insbesondere das erste Kontaktelement oder die erste Spule, zugleich als Datenüberträger, insbesondere als Überträger der Berechtigungsinformation, fungiert. Es kann sein, dass kontaktlose Datenübertragung auf das Versperrelement nur unter Einbeziehung der erste Spule stattfindet.

Sowohl für den Fall, dass die die Kommunikation zwischen dem Versperrelement und dem Berechtigungsträgerelement zur Durchführung der Verifikation der Berechtigungsinformation ohne Einbeziehung des generischen mobilen Elements als auch für den Fall, dass das generische mobile Element nur als Überträger dient, ist das generische mobile Element bevorzugt frei von einem Prozessor und/oder einem elektronischen Speicher ausgebildet. Das generische mobile Element kann eine Antennenschaltung umfassen.

Bevorzugt wird die elektrische Energieübertragung zwischen dem generischen mobilen Element und dem Versperrelement erst, nachdem der Aktuatür die Bewegung des Entriegelungselements durch das generische mobile Element ermöglicht hat, also eingekuppelt oder entsperrt hat, beendet. Hierdurch kann die Energiequelle insbesondere fortlaufend während der Durchführung der Verifikation der Berechtigung und/oder während der Bestromung des elektrischen Aktuators das Versperrelement mit elektrischer Energie versorgen. Somit ist es für die Durchführung der Verifikation der Berechtigung und/oder zur Bestromung des elektrischen Aktuators zum Einkoppeln oder Entsperren nicht notwendig, elektrische Energie, die in dem Versperrelement gespeichert oder erzeugt wird, zu nutzen. Z. B. kann die elektrische Energieversorgung, insbesondere ausschließlich, durch Wegbewegen des generischen mobilen Elements zu dem Versperrelement beenden werden.

Es kann also vorgesehen sein, dass die Energiequelle fortlaufend während der Durchführung der Verifikation der Berechtigungsinformation und/oder während der Ermöglichung der Bewegung des Entriegelungselements durch das generische mobile Element das Versperrelement bestromt. So kann eine Voraussetzung für das Stattfinden der Verifikation der Berechtigungsinformation sein, dass das generische mobile Element mit dem Versperrelement während der Durchführung der Verifikation der Berechtigungsinformation das Versperrelement bestromt.

Es kann sein, dass das Versperrelement keine Verbindung zu einer ortsfesten elekrischen Energieversorgung aufweist. Bevorzugt weist das Versperrelement keine eigenen elektrochemischen Energiespeicher auf. Besonders bevorzugt weist das Versperrelement keine eigene elektrische Energieversorgung auf. Vielmehr ist es denkbar, dass das Versperrelement elektrische Energie ausschließlich von dem generischen mobilen Element erhält. Hierdurch ist es möglich, das Verfahren auch bei Versperrelementen einzusetzen, die sehr selten eine Zugang freigeben müssen.

Alternativ ist es denkbar, dass ein Energiezwischenspeicher in dem Versperrelement vorgesehen ist. Der Energiezwischenspeicher kann insbesondere vorgesehen sein, wenn die erste Energieübertragungseinrichtung als Datenüberträger fungiert. Hierbei kann während der Datenübertragung die elektrische Energieversorgung durch das generische mobile Element nicht ausreichend sein.

Die mechanische Verbindung wird bevorzugt nach der Bewegung des Entriegelungselements in die Entriegelungsposition gelöst.

Bevorzugt ist vorgesehen, dass durch eine Abziehbewegung des generischen mobilen Elements die elektrische Wirkverbindung und die mechanische Verbindung mit dem Versperrelement beendet wird. Beispielsweise kann das generische mobile Element aus dem Versperrelement herausgezogen werden, wodurch die elektrische Wirkverbindung und die mechanische Verbindung beendet werden. Somit wird auch die elektrische Wirkverbindung bevorzugt nach der Bewegung des Entriegelungselements in die Entriegelungsposition gelöst.

Es kann vorgesehen sein, dass das generische mobile Element dem Versperrelement ausreichende Energie, insbesondere elektrische Energie, zur Verfügung stellt, um zu veranlassen, dass, nachdem der elektrische Aktuator eine Bewegung des Sperrelements durch das generische mobile Element ermöglicht hat, eine Betätigung des generischen mobilen Elements erneut wirkungsfrei auf die Bewegung des Entriegelungselements ist.

Der elektrische Aktuator führt entweder eine Einkupplung oder eine Entsperrung durch, damit das mit dem Versperrelement mechanisch verbundene, generische mobile Element das Entriegelungselement bewegen, insbesondere drehen, kann. Ein Auskupplungszustand bzw. der Zustand der Sperrung muss aber nach einer gewissen Zeit oder nach dem Entriegeln der Tür erneut hergestellt werden, damit ein unberechtigter Besucher nicht Zugang zu dem Objekt erhalten kann. Somit muss das Versperrelement die Möglichkeit, durch das generische mobile Element das Entriegelungselement zu bewegen, wieder aufheben. Insbesondere der elektrische Aktuator muss entweder eine Auskupplung durchführen oder das Entriegelungselement sperren. Bevorzugt stellt das generische mobile Element hierzu dem Versperrelement Energie, insbesondere elektrische Energie, zur Verfügung.

Es kann sein, dass die insbesondere elektrische Energie durch das generische mobile Element vor dem Aufheben der Möglichkeit, das Entriegelungselement durch das generische mobile Element zu bewegen, zur Verfügung gestellt wird. Insbesondere kann während dem In-Kontakt-Tretens des generischen mobilen Element mit dem Versperrelement oder während der Herstellung der Möglichkeit das Entriegelungselement durch das generische mobile Element zu bewegen oder während der Bewegung des Entriegelungselements durch das generische mobile Element eine Feder gespannt werden. Diese Feder verursacht anschließend das Aufheben der Möglichkeit, das Entriegelungselement durch das generische mobile Element zu bewegen. Wird die Energie durch das generische mobile Element vor oder während der Entriegelung der Tür, insbesondere der Bewegung des Entriegelungselements, von dem generischen mobilen Element zur Verfügung gestellt, so kann nach der Bewegung des Entriegelungselement in die Entriegelungsposition unmittelbar das generische mobile Element von dem Versperrelement getrennt, insbesondere abgezogen, werden.

Alternativ wird nach der Bewegung des Entriegelungselements in die Entriegelungsstellung der elektrische Aktuator bestromt, um die Möglichkeit, das Entriegelungselement durch das generische mobile Element zu bewegen, aufzuheben, insbesondere um das Entriegelungselement zu entkuppeln oder zu sperren. Wird der Aktuator hierzu bestromt, so wird bevorzugt das generische mobile Element solange an oder in dem Versperrelement arretiert, bis veranlasst worden ist, dass eine Betätigung des generischen mobilen Elements wirkungsfrei auf die Bewegung des Entriegelungselements ist. Das Versperrelement kann hierzu einen Arretierungsmechanismus umfassen. Der Arretierungsmechanismus kann zumindest indirekt durch den Akuator gelöst werden.

Das generische mobile Element kann eine Lichtanzeige und/oder einen akustischen Tongeber umfassen. Das Versperrelement, insbesondere der Kontroller, kann die Lichtanzeige und/oder den Tongeber ansteuern, um den Zustand des Versperrelemens anzuzeigen. Die Lichtanzeige und/oder der Tongeber können durch die Energiequelle bestromt werden.

Die Aufgabe der Erfindung wird auch gelöst durch eine Schließeinheit mit einem Versperrelement und mit einem generischen mobilen Element. Durch das Versperrelement ist ein Zugang zu einem Objekt, dem das Versperrelement zugeordnet ist, in Abhängigkeit von einer Verifikation einer Berechtigungsinformation freigebbar. Das Versperrelement umfasst eine elektronische Schaltung, insbesondere einen Kontroller oder einen Prozessor, zur Kommunikation mit einem Berechtigungsträgerelement. Erfindungsgemäß ist die Schließeinheit so ausgelegt, dass eine Freigabe des Zugangs, insbesondere ein Durchführen der Verifikation der Berechtigungsinformation, zur Bedingung hat, dass das generische mobile Element am Ort des Versperrelementes zugegen ist und die elektronische Schaltung an einer Kommunikation zur der Verifikation der Berechtigungsinformation mit dem Berechtigungsträgerelement teilnimmt.

Das Versperrelement der erfindungsgemäßen Schließeinheit kann wie zuvor beschrieben ausgebildet sein. Das generische mobile Element der erfindungsgemäßen Schließeinheit kann wie zuvor beschrieben ausgebildet sein. Hierbei werden im Folgenden nur einige Aspekte wiederholt. Im übrigen wird auf die möglichen Ausführungen des erfindungsgemäßen Verfahrens hingewiesen.

Das generische mobile Element ist insbesondere dazu vorgesehen, von einem Benutzer mitgeführt zu werden. Bevorzugt ist das generische mobile Element frei von einem mechanischen Berechtigungscode, insbesondere von einem Schlüsselschaft mit einer mechanischen Codierung, z. B. Schlüsselkerben, Schlüsselzinken. So umfasst das Versperrelement bevorzugt keine Sperrstifte, die durch das Herstellen der mechanischen Verbindung zwischen dem generischen mobilen Element und dem Versperrelement, insbesondere durch das Einstecken des generischen mobilen Elements in das Versperrelement, in eine Stellung bewegt werden, die eine Bewegung des Entriegelungselements ermöglichen.

Das Versperrelement kann einen elektrischen Aktuator, insbesondere eine elektromechanische Vorrichtung, z. B. einen Elektromotor oder ein Solenoid, oder eine elektromagnetische Vorrichtung, umfassen, mittels derer der Benutzer Zugang zu dem Objekt erlangen kann. Der elektrische Aktuator kann als Teil einer Kupplungseinheit oder als Teil einer Sperreinheit ausgebildet sein. Das Versperrelement kann ein Entriegelungselement umfassen. Eine Betätigung des Entriegelungselements dient zur Entriegelung einer Tür.

Das Versperrelement kann ein erstes mechanisches Verbindungsmittel, insbesondere ein erstes Formschlussmittel, umfassen. Das generische mobile Element kann ein dazu korrespondierendes zweites mechanisches Verbindungsmittel, insbesondere ein zweites Formschlussmittel, umfassen. Mittels der mechanischen Verbindung, insbesondere dem Formschluss, zwischen dem generischen mobilen Element und dem Versperrelement kann insbesondere das Entriegelungselement in die Entriegelungsposition bewegbar sein.

Nach der Verifikation der Berechtigungsinformation und bei mechanischer Verbindung zwischen dem generischen mobilen Element und dem Versperrelement ermöglicht der elektrische Aktuator, dass das generische mobile Element das Entriegelungselement bewegen kann, insbesondere durch ein Einkuppeln oder ein Entsperren.

Das Versperrelement kann einen Speicher, insbesondere einen nicht-flüchtigen Speicher, umfassen. Das Versperrelement kann die Überprüfung der übertragenden Berechtigungsinformation mittels der elektronischen Schaltung vornehmen. Dem Versperrelement kann eine Information vorliegen, mittels der die Berechtigungsinformation verifizierbar ist.

Das generische mobile Element kann eine elektrische Energiequelle aufweisen. Die elektrische Energiequelle kann z. B. als zumindest eine Batterie oder als zumindest ein Akkumulator ausgebildet sein. Das Versperrelement kann durch das generische mobile Element mit Energie aus der Energiequelle versorgt werden.

Die elektrische Energiequelle stellt insbesondere dem Versperrelement ausreichende Energie zur Durchführung der Verifikation der Berechtigungsinformation zur Verfügung. Zusätzlich oder alternativ stellt die elektrische Energiequelle dem elektrischen Aktuator Energie zur Verfügung, damit der Aktuator die Bewegung des Entriegelungselements durch das generische mobile Element ermöglichen kann. Nachdem durch die elektrische Energie des generischen mobilen Elements die Bewegung des Entriegelungselements durch das generische mobile Element ermöglicht wurde, wird bevorzugt über das generische mobile Element mechanische Arbeit geleistet, um das Entriegelungselement zu bewegen.

Das generische mobile Element kann ein Gehäuse umfassen. Bevorzugt ist die Energiequelle in dem Gehäuse angeordnet. Besonders bevorzugt ist das Gehäuse offenbar. Das Gehäuse kann hierzu Deckel umfassen. Der Deckel kann abnehmbar oder abklappbar ausgebildet sein.

Das generische mobile Element kann ein Fach zur Aufnahme der Energiequelle umfassen. Das Fach umfasst insbesondere elektrische Kontakte zum elektrischen Kontaktieren der Energiequelle. Hierbei kann zumindest ein elektrischer Kontakt federnd an der Energiequelle anliegen.

Das Versperrelement kann eine erste Energieübertragungseinrichtung, insbesondere zumindest ein erstes Kontaktelement oder eine erste Spule, zur elektrischen Energieübertragung von dem generischen mobilen Element umfassen. Das generische mobile Element kann eine dazu korrespondierendes zweite Energieübertragungseinrichtung, insbesondere zumindest ein zweites Kontaktelement oder eine zweite Spule, zur Übertragung von elektrischer Energie auf das Versperrelement umfassen.

Durch den Beginn der Energieübertragung über das erste Energieübertragungselement, insbesondere durch den Aufbau einer elektrischen Wirkverbindung, des generischen mobilen Elements mit dem Versperrelement, kann die elektronische Schaltung eingeschaltet werden. Besonders bevorzugt ist die elektronische Schaltung ausgeschaltet, sofern das generische mobile Element und die elektronische Schaltung getrennt sind. Z. B. kann das generische mobile Element durch das elektrischen Miteinander-in-Kontakt-Treten einen Stromkreis bestromen, insbesondere schließen, durch das die elektronische Schaltung mit elektrischer Energie versorgt wird.

Es kann sein, dass für den Fall, dass über die erste Energieübertragungseinrichtung des Versperrelements kein elektrischer Strom fließt, das Versperrelement jegliche Kommunikation zur Durchführung der Verifikation der Berechtigungsinformation unterlässt. Für den Fall, dass über die erste Energieübertragungseinrichtung des Versperrelements kein elektrischer Strom fließt, kann die elektronische Schaltung ausgeschaltet sein. Es ist möglich, dass das Versperrelement keinen elektrischen Strom verbraucht, wenn über die erste Energieübertragungseinrichtung des Versperrelements kein elektrischer Strom fließt. Es kann sein, dass wenn über die erste Energieübertragungseinrichtung des Versperrelements kein elektrischer Strom fließt, das Versperrelement frei von einer Kenntnis einer aktuellen Uhrzeit ist.

Das Versperrelement, insbesondere die elektronische Schaltung, kann insbesondere ausgebildet sein, mit dem Berechtigungsträgerelement kabellose Nahfeldkommunikation zu kommunizieren. Beispielsweise können das Berechtigungsträgerelement und das Versperrelement über RFID oder BLE miteinander kommunizieren. Eine Antenne zur kabellosen Kommunikation mit dem Berechtigungsträgerelement kann hierbei entweder in dem generischen mobilen Element oder in dem Versperrelement angeordnet sein. Bevorzugt ist hierbei jeweils das anderen Element frei von einer Antenne ausgebildet.

Die Energiequelle kann fortlaufend während der Durchführung der Verifikation der Berechtigung und/oder zur Bestromung des elektrischen Aktuators zum Einkoppeln oder zum Entsperren das Versperrelement mit elektrischer Energie versorgen. Somit ist es für die Durchführung der Verifikation der Berechtigung und/oder zur Bestromung des elektrischen Aktuators zum Einkoppeln oder Entsperren nicht notwendig, elektrische Energie, die in dem Versperrelement gespeichert oder erzeugt wird, zu nutzen.

Bevorzugt ist vorgesehen, dass durch eine Abziehbewegung des generischen mobilen Elements die elektrische Wirkverbindung und die mechanische Verbindung mit dem Versperrelement beendet wird. Bevorzugt weist das Versperrelement keine eigenen elektrochemischen Energiespeicher auf. Besonders bevorzugt weist das Versperrelement keine eigene elektrische Energieversorgung auf.

Es kann vorgesehen sein, dass das generische mobile Element dem Versperrelement ausreichende Energie, insbesondere elektrische Energie, zur Verfügung stellt, um zu veranlassen, dass nach Ermöglichen einer Bewegung des Sperrelements durch das generische mobile Element eine Betätigung des generischen mobilen Elements erneut wirkungsfrei auf die Bewegung des Entriegelungselements ist. Insbesondere kann hierzu eine Feder gespannt werden. Diese Feder verursacht anschließend das Aufheben der Möglichkeit, das Entriegelungselement durch das generische mobile Element zu bewegen. Alternativ wird nach der Bewegung des Entriegelungselements in die Entriegelungsstellung der elektrische Aktuator bestromt, um die Möglichkeit, das Entriegelungselement durch das generische mobile Element zu bewegen, aufzuheben, insbesondere um das Entriegelungselement zu entkuppeln oder zu sperren. Wird der Aktuator hierzu bestromt, so wird bevorzugt das generische mobile Element solange an oder in dem Versperrelement arretiert, bis veranlasst worden ist, dass eine Betätigung des generischen mobilen Elements wirkungsfrei auf die Bewegung des Entriegelungselements ist.

Das generische mobile Element kann eine Lichtanzeige und/oder einen akustischen Tongeber umfassen. Die Lichtanzeige kann durch das Versperrelement angesteuert werden.

Die Aufgabe der Erfindung wird auch durch ein elektronisches Schließsystem mit einem Versperrelement und einem generischen mobilen Element und einem Berechtigungsträgerelement gelöst. Durch das Versperrelement ist ein Zugang zu einem Objekt, dem das Versperrelement zugeordnet ist, in Abhängigkeit von einer Verifikation einer Berechtigungsinformation freigebbar. Das Berechtigungsträgerelement enthält die Berechtigungsinformation. Das erfindungsgemäße Schließsystem ist so ausgelegt, dass eine Freigabe des Zugangs, insbesondere ein Durchführen der Verifikation der Berechtigungsinformation, zur Bedingung hat, dass das generische mobile Element und das Berechtigungsträgerelement am Ort des Versperrelementes zugegen ist.

Das elektronische Schließsystem kann eine erfindungsgemäße Schließeinheit und das Berechtigungsträgerelement umfassen. Das Berechtigungsträgerelement kann wie zuvor beschrieben ausgebildet sein. Insbesondere kann das Berechtigungsträgerelement dazu vorgesehen sein, von einem Benutzer mitgeführt zu werden. Das Berechtigungsträgerelement kann insbesondere mobil ausgebildet sein. Das Berechtigungsträgerelement kann z. B. als ein Mobiltelefon, als ein mobiler Computer, als ein Wearable oder ähnliches ausgebildet sein. Alternativ kann das Berechtigungsträgerelement als ein Implantat ausgebildet sein.

Das Berechtigungsträgerelement kann z. B. einen Prozessor enthalten. Das Berechtigungsträgerelement kann insbesondere einen Speicher, insbesondere einen nicht flüchtigen Speicher, enthalten. In dem Speicher kann die Berechtigungsinformation gespeichert sein.

Das Berechtigungsträgerelement umfasst insbesondere eine Sende- und/oder Empfangseinheit zur Kommunikation mit einem Server, z. B. einer Cloud, zum Empfang der Berechtigungsinformation. Die Sende- und/oder Empfangseinheit dient insbesondere zur kabellosen Kommunikation. Z. B. kann eine Kommunikation über ein Telekommunikationsnetz erfolgen. Alternativ kann eine Kommunikation über ein Nahfeld erfolgen.

Das Berechtigungsträgerelement umfasst insbesondere eine Sende- und/oder Empfangseinheit zur Kommunikation mit dem Versperrelement. Die Kommunikation mit dem Versperrelement kann insbesondere eine kabellose Nahfeldkommunikation sein. Beispielsweise können das Berechtigungsträgerelement und das Versperrelement über RFID oder BLE miteinander kommunizieren.

Die Erfindung wird nun anhand mehrerer Ausführungsbeispiele näher beschrieben. Dabei zeigen:
Fig. 1 eine schematische Darstellung eines ersten Ausführungsbeispiels eines erfindungsgemäßen Schließsystems und einer erfindungsgemäßen Schließeinheit,
Figur 2 eine schematische Darstellung eines zweiten Ausführungsbeispiels eines erfindungsgemäßen Schließsystems und einer erfindungsgemäßen Schließeinheit,
Fig. 3 eine schematische Darstellung eines dritten Ausführungsbeispiels eines erfindungsgemäßen Schließsystems und einer erfindungsgemäßen Schließeinheit,
Fig. 4 eine schematische Darstellung eines vierten Ausführungsbeispiels eines erfindungsgemäßen Schließsystems und einer erfindungsgemäßen Schließeinheit,
Fig. 5 eine schematische Darstellung eines fünften Ausführungsbeispiels eines erfindungsgemäßen Schließsystems und einer erfindungsgemäßen Schließeinheit,
Fig. 6 eine schematische Darstellung eines erfindungsgemäßen Verfahrens.

In den Figuren werden gleiche Elemente mit denselben Bezugszeichen bezeichnet.

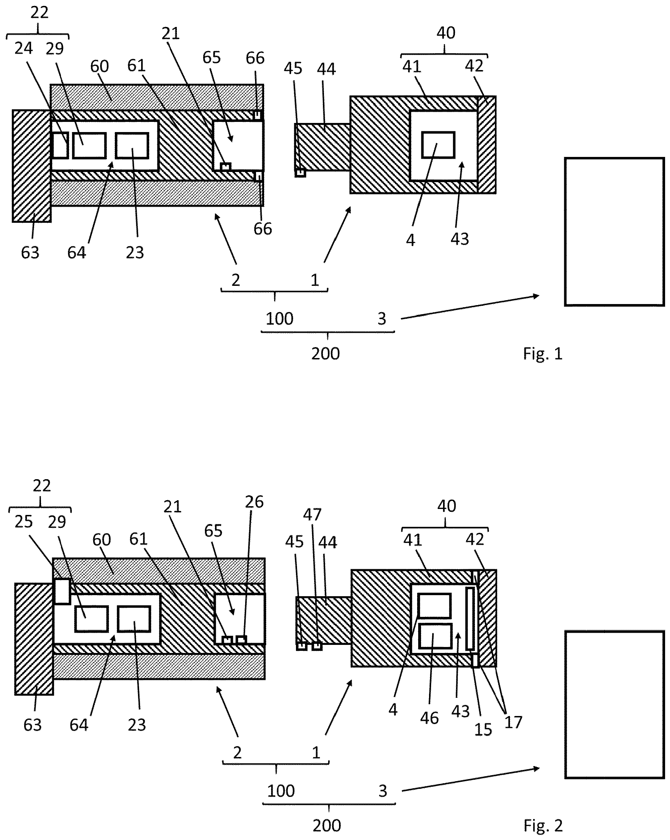

In Figur 1 ist ein erstes Ausführungsbeispiel einer erfindungsgemäßen Schließeinheit 100 dargestellt. Die erfindungsgemäße Schließeinheit 100 umfasst ein Versperrelement 2 und ein generisches mobiles Element 1. Zusätzlich zu der erfindungsgemäßen Schließeinheit 100 ist Berechtigungsträgerelement 3 dargestellt, so dass in Figur 1 auch ein erfindungsgemäßes Schließsystem 200 dargestellt ist. Das erfindungsgemäße Schließsystem 200 umfasst die erfindungsgemäße Schließeinheit 100 und das Berechtigungsträgerelement 3. Die Schließeinheit 100 ist in Figur 1 in einer Schnittdarstellung gezeigt. Das generische mobile Element 1, das Versperrelement 2 und das Berechtigungsträgerelement 3 sind jeweils separat voneinander ausgebildet.

Das Versperrelement 2 trägt dazu bei, einen Zugang zu einem Objekt, z. B. einem Raum, zu versperren. Kann sich jedoch ein Benutzer als berechtigt zeigen, so trägt das Versperrelement 2 dazu bei, dass der Benutzer Zugang zu dem Objekt erlangt. Es müssen sowohl das generische mobile Element 1 als auch Berechtigungsträgerelement 3 am Ort des Versperrelements vorhanden sein, damit das Versperrelement 2 den Zugang zu dem Objekt freigibt.

Das Versperrelement 2 umfasst ein Zylindergehäuse 60, in dem ein Zylinderkern 61 drehbar gelagert ist. Das Versperrelement 2 umfasst ein Entriegelungselement 63. Das Entriegelungselement 63 kann somit in eine Entriegelungsposition gedreht werden.

Das in Figur 1 dargestellte Versperrelement 2 kann als ein elektromechanischer Schließzylinder 2 ausgebildet sein. Das Entriegelungselement 63 ist dann als eine exzentrische Schließnase 63 ausgebildet. Wird die Schließnase 63 gedreht, so führt die Drehung in einem montierten Zustand des Schließzylinders 2 zu einem Entriegeln einer Tür, in dem ein Riegel und/oder eine Falle eines nicht dargestellten Schlosses bewegt wird. Der Schließzylinder 2 ist mit der Schließnase 63 in dem Schloss anordbar.

Das in Figur 1 dargestellte Versperrelement 2 kann alternativ als ein elektromechanisches Drehriegelschloss 2 angesehen werden. In diesem Fall dient das Entriegelungselement 63 selber als ein Riegel für eine Tür.

Das in Figur 1 dargestellte Versperrelement 2 kann in einer weiteren Alternative als ein Teil eines Vorhängeschlosses angesehen werden. In diesem Fall dient das Entriegelungselement 63 dazu, einen Bügel des Vorhängeschlosses freizugeben.

Das Versperrelement 2 umfasst einen Hohlraum 64. In dem Hohlraum 64 ist ein Kontroller 23 des Versperrelements 2 angeordnet. Der Kontroller 23 umfasst einen Prozessor als elektronische Schaltung und einen nicht flüchtigen Speicher.

Das Versperrelement 2 umfasst einen elektrischen Aktuator 29, der z. B. als ein Elektromotor ausgebildet ist. Der elektrische Aktuator 29 ist Teil einer Kupplungseinheit 22. In einem eingekuppelten Zustand der Kupplungseinheit 22 verbindet ein Kupplungselement 24 das Entriegelungselement 63 und den Zylinderkern 61 miteinander. In einem ausgekuppelten Zustand der Kupplungseinheit sind das Entriegelungselement 63 und der Zylinderkern 61 voneinander getrennt, so dass eine Drehung des Zylinderkerns 61 keinen Einfluss auf die Position des Entriegelungselements 63 hat. Der elektrische Aktuator 29 kann das Kupplungselement 24 derart bewegen, so dass die Kupplungseinheit 22 den eingekuppelten und den ausgekuppelten Zustand einnehmen kann. In Figur 1 ist der ausgekuppelte Zustand dargestellt.

Das generische mobile Element 1 umfasst ein Gehäuse 40. Das Gehäuse 40 umfasst einen Grundkörper 41 und einen Deckel 42. Der Deckel 42 ist von dem Grundkörper 41 abnehmbar, so dass ein Fach 43 zur Aufnahme einer elektrischen Energiequelle 4 zugänglich wird. Hierdurch ist die Energiequelle 4 leicht austauschbar.

Das generische mobile Element 1 wird durch den Benutzer mitgeführt und ist für den Verbleib bei dem Benutzer gedacht. D. h. ist der Benutzer abwesend, so verbleibt das Versperrelement 2 an dem Objekt, während das generische mobile Element 1 und das Berechtigungsträgerelement 3 abwesend sind.

Das generische mobile Element 1 dient dazu, von dem zugangssuchenden Benutzer in Kontakt mit dem Versperrelement 2 gebracht zu werden. Hierzu weist das Versperrelement 2 ein erstes Formschlussmittel 65 insbesondere in Form einer Ausnehmung auf. Das generische mobile Element 1 weist ein zu dem ersten Formschlussmittel korrespondierendes Formschlussmittel 44 insbesondere in Form eines Vorsprungs auf. Um Zugang zu erlangen, wird zunächst von dem Benutzer mittels des ersten und des zweiten Formschlussmittels 65, 44 eine mechanische Verbindung als Formschluss zwischen dem Versperrelement 2 und dem generischen mobilen Element 1 hergestellt. Insbesondere steckt der Benutzer das generische mobile Element 1 in das Versperrelement 2. Nun lässt sich der Zylinderkern 61 mittels des generischen mobilen Elements 1 drehen. Das generische mobile Element 1 dient somit als mobiler Knauf der Schließeinheit 100. In dem ausgekuppelten Zustand der Kupplungseinheit 22 dreht sich zwar der Zylinderkern 61 mit dem generischen mobilen Element 1 mit, jedoch ist eine Drehung des generischen mobilen Elements 1 wirkungslos auf eine Bewegung des Entriegelungselements 63.

Das generische mobile Element 1 stellt die elektrische Energie für das Versperrelement 2 zur Verfügung. Hierzu umfasst das Versperrelement 2 zumindest ein erstes Kontaktelement 21 und das generische mobile Element 1 ein dazu korrespondierendes zweites Kontaktelement 45. Bei der Herstellung der vollständigen mechanischen Verbindung zwischen dem generischen mobilen Element 1 und dem Versperrelement 2 wird zugleich der elektrische Kontakt zwischen dem ersten Kontaktelement 21 und dem zweiten Kontaktelement 45 geschlossen. Durch nicht dargestellte elektrische Leitungen wird der Kontroller 23 des Versperrelements 2 von der Energiequelle 4 bestromt. Die elektrischen Leitungen führen von der Energiequelle 4 durch den Grundkörper 41 zu dem zweiten Kontaktelement 45 und von dem ersten Kontaktelement 21 durch den Zylinderkern 61 zu dem Kontroller 23. Durch die Bestromung wird der Kontroller 23 eingeschaltet. Zuvor war der Kontroller 23 ausgeschaltet.

Ist der Kontroller 23 eingeschaltet, so führt der Kontroller 23 mit dem Berechtigungsträgerelement 3 über eine Antenne 66 des Versperrelements 2 eine kabellose Nahfeldkommunikation, z. B. RFID oder BLE, mit dem Berechtigungsträgerelement 3 durch. Die Kommunikation dient dazu zumindest einen Teil einer Berechtigungsinformation, die auf dem Berechtigungsträgerelement 3 gespeichert ist, zu empfangen.

Das Berechtigungsträgerelement 3 enthält die Berechtigungsinformation bereits, bevor der Benutzer mit dem Berechtigungsträgerelement 3 und dem generischen mobilen Element 1 am Ort des Versperrelements 1 zugegen ist, insbesondere bevor ein elektrischer Kontakt zwischen dem Versperrelement 2 und dem generischen mobilen Element 1 hergestellt ist.

Das Berechtigungsträgerelement 3 kann zur Speicherung der Berechtigungsinformation einen Kontroller mit einem Prozessor und einem Speicher umfassen. Das Berechtigungsträgerelement 3 umfasst eine Sende- und Empfangseinheit zur Kommunikation mit dem Versperrelement 2. Das Berechtigungsträgerelement 3 kann mobilfunkfähig ausgebildet sein und über das Mobilfunknetz die Berechtigungsinformation erhalten. Insbesondere kann das Berechtigungsträgerelement als ein Mobiltelefon ausgebildet sein.

Das Versperrelement 2 empfängt von dem Berechtigungsträgerelement 3 zumindest einen Teil der Berechtigungsinformation, insbesondere einen Code. Das Versperrelement 2 überprüft den Code mittels einer dem Versperrelement 2 zur Verfügung stehenden Information.

Da das Versperrelement 2 zwischendurch ausgeschaltet war, kennt das Versperrelement 2 nicht die aktuelle Zeit. Enthält die Berechtigungsinformation eine Gültigkeitszeitraum, in dem Zugang gewährt werden soll, so wird der Gültigkeitszeitraum entweder von dem Berechtigungsträgerelement 3 überprüft und das Ergebnis der Überprüfung dem Versperrelement 2 mitgeteilt. Das Versperrelement 2 kann die Mitteilung erwarten und nur bei Erhalt der positiven Mitteilung den Zugang gewähren. Alternativ übermittelt das Berechtigungsträgerelement 3 dem Versperrelement 2 eine aktuelle Uhrzeit zur Überprüfung des Gültigkeitszeitraums durch das Versperrelement 2.

Stellt das Versperrelement 2 fest, dass die Berechtigungsinformation einen Zugang gestattet, so bewegt der Aktuator 29 das Kupplungselement 24, so dass die Kupplungseinheit 22 in dem eingekuppelten Zustand gelangt. Nun kann eine Drehung des generischen mobilen Elements 1 durch den Benutzer eine Drehung des Zylinderkerns 61 und damit eine Drehung des Entriegelungselements 63 in die Entriegelungsposition hervorrufen. Die notwendige mechanische Arbeit zur Bewegung des Entriegelungselements 63 wird hierbei durch das generische mobile Element 1 eingebracht.

Nachdem das Entriegelungselement 63 die Entriegelungsposition eingenommen hat oder nach einer dem Kontroller 23 vorliegenden Zeitspanne wird der Aktuator 29 erneut angesteuert, um das Kupplungselement 24 erneut zu bewegen, so dass die Kupplungseinheit 22 sich wieder in dem ausgekuppelten Zustand befindet. Hierdurch wird erreicht, dass nur der berechtigte Benutzer, jedoch nicht ein später kommende Benutzer sich Zugang zu dem Objekt verschaffen kann. Das generische mobile Element 1 wird durch einen nicht dargestellten Arretierungsmechanismus des Versperrelements 2 solange in mechanischer Verbindung mit dem Versperrelement 2 arretiert, bis mittels des Aktuators 29 die Kupplungseinheit 22 den entkuppelten Zustand wiederhergestellt hat. Zugleich mit dem Erreichen des entkupptelten Zustands wird die Arretierung des generischen mobilen Elements durch das Versperrelement 2 gelöst. Hierzu kann eine Wirkverbindung zwischen dem Arretierungsmechanismus und der Kupplungseinheit 22 vorgesehen sein. Nun kann von dem Benutzer insbesondere werkzeugfrei die mechanische Verbindung zwischen dem Versperrelement 1 und dem generischen mobilen Element 2 gelöst werden.

Das Versperrelement 2 erhält somit von dem generischen mobilen Element 1 die notwendig elektrische Energie, um eine Kommunikation mit dem Berechtigungsträgerelement 3 durchzuführen, die empfangene Berechtigungsinformation zu überprüfen, und, falls die Berechtigungsinformation verifiziert wurde, den Aktuator 29 zu bestromen, um das Kupplungselement 24 in eine Kupplungsposition und anschließend in eine Entkupplungsposition zu bewegen. Das Versperrelement 2 ist frei von einem elektrochemischen Energiespeicher ausgebildet. Das Versperrelement 2 ist frei von einer eigenen Energieversorgung ausgebildet. Das Versperrelement 2 ist frei von einem Energiespeicher, z. B. einem Kondensator, ausgebildet, der die notwendige elektrische Energie für die Kommunikation mit dem Berechtigungsträgerelement 3 und/oder die Überprüfung der Berechtigungsinformation und/oder die Bestromung des Aktuators 29 zur Bewegung des Kupplungselements 24 in die Kupplungs- und/oder Entkupplungsposition zwischenspeichert. Vielmehr wird die elektrische Energie von dem generischen mobilen Element 1 unmittelbar ohne Zwischenspeicher dem Versperrelement 2 zur Verfügung gestellt. Somit bestromt das generische mobile Element 1 fortlaufend das Versperrelement 2, sofern das Versperrelement 2 gerade elektrische Energie benötigt.

Das generische mobile Element 1 ist dazu ausgebildet, in alle Versperrelementen 2 von demselben Typ in mechanische Verbindung gebracht zu werden. Hierbei ist das generische mobile Element frei von einer mechanischen Codierung ausgebildet, die nur zu einem einzelnen Versperrelement 2 oder auf eine geringe Anzahl von Versperrelementen 2 passt. Insbesondere ist das Versperrelement 2 frei von Sperrstiften ausgebildet, die, wenn das generische mobile Element 1 und das Versperrelement 2 voneinander getrennt sind, eine Bewegung des Zylinderkerns 61 zu dem Zylindergehäuse 60 blockieren, und die bei einer Herstellung der mechanischen Verbindung von dem generischen mobilen Element 1 und dem Versperrelement 2 die Bewegung des Zylinderkerns 61 zu dem Zylindergehäuse 60 freigeben.

Das generische mobile Element 1 dient ausschließlich dazu, dem Versperrelement 2 elektrische Energie und mechanische Arbeit zur Verfügung zu stellen.

Das generische mobile Element 1 ist und bleibt während des gesamten Verfahrens zur Entriegelung der Tür frei von der Berechtigungsinformation. Vielmehr kommunizieren das Versperrelement 2 und das Berechtigungsträgerelement 3 ohne Einbeziehung des generischen mobilen Elements 1 miteinander. Das generische mobile Element 1 ist frei von einer Antenne ausgebildet. Das generische mobile Element 1 ist frei von einem Prozessor und/oder einem Speicher ausgebildet. Das generische mobile Element 1 ist somit «dumm».

Das Versperrelement 2 stellt das Zugegensein des generischen mobilen Elements 1 durch die Versorgung des Versperrelements 2 mit elektrischen Strom fest. Das Versperrelement 2 stellt das Zugegensein des Berechtigungsträgerelements durch den Empfang einer Berechtigungsinformation fest.

Es genügt nicht, wenn nur das generische mobile Element 1 ohne das Berechtigungsträgerelement 3 zugegen ist, da dann die Berechtigungsinformation fehlt, um Zugang zu dem Objekt zu gewähren. Es genügt zudem nicht, wenn nur das Berechtigungsträgerelement 3 ohne das generische mobile Element 1 zugegen ist, da dann das Versperrelement 2 nicht mit der notwendigen elektrischen Energie versorgt wird.

Die Schließeinheit 100 ist ausgebildet, dass nach dem Auskuppeln der Kupplungseinheit 22 das generische mobile Element 1 von dem Versperrelement 2 getrennt wird. Während der Trennung der mechanischen Verbindung zwischen dem Versperrelement 2 und dem generischen mobilen Element 1 wird auch der elektrische Kontakt zwischen den Kontaktelementen 21, 45 getrennt. Hierdurch wird der Kontroller 23 ausgeschaltet. Im ausgeschalteten Zustand des Kontrollers 23 fehlt eine Überprüfung, ob ein Berechtigungsträgerelement 3 zugegen ist. Eine Uhrzeit des Versperrelments 2 wird nicht aktualisiert oder das Versperrelement 2 kennt die Uhrzeit nicht.

Durch die erfindungsgemäße Schließeinheit 100 wird erreicht, dass durch die Mobilfunkverbindung des Berechtigungsträgerelements 3 die Berechtigungsinformation leicht aktualisiert werden kann. Dadurch, dass in dem generischen mobilen Element 1 keine Berechtigungsinformation gespeichert ist, ist das generische mobile Element 1 «dumm». Es ist unkritisch, wen das generische mobile Element 1 verloren geht. Dadurch, dass über das generische mobile Element 1 mechanische Arbeit verrichtet wird, benötigt das Versperrelement 2 weniger elektrische Energie, als wenn das Versperrelement 2 mittels des Aktuators 29 das Entriegelungselement 63 bewegen müsste. Dadurch, dass das generische mobile Element 1 elektrische Energie zur Verfügung stellt, muss in dem Versperrelement 2 keine Batterie vorgehalten und ausgewechselt werden. Dadurch dass das generische mobile Element 1 leicht und werkzeugfrei mit dem Versperrelement 2 mechanisch und elektrisch verbunden werden kann und mit allen Versperrelementen 2 eines Typs verbunden werden, kann das generische mobile Element 1 mitgeführt und leicht und überall eingesetzt werden. Somit ist in einem System geschaffen worden, dass nur ein einziges generisches mobiles Elemente 1 benötigt. Somit können Material und Herstellkosten eingespart werden. Dadurch dass das generische mobile Element 1 knaufartig ausgebildet ist, können insbesondere Batterien oder Akkumulatoren mit einer großen Ladungsmenge bzw. Nennkapazität verwendet werden. Die erfindungsgemäße Schließeinheit eignet sich besonders für Benutzer, die es mit einer große Anzahl von Versperrelementen 2, die selten Zugang gewähren müssen, zu tun haben, z. B. für einen Elektriker, der Netzstationen warten muss.

In Figur 2 ist ein zweites Ausführungsbeispiel einer erfindungsgemäßen Schließeinheit 100 und eines erfindungsgemäßen Schließsystems 200 dargestellt. Im Folgenden wird nur auf die Unterschiede zu dem ersten, in Figur 1 dargestellten Ausführungsbeispiel eingegangen. Im Übrigen wird auf die Beschreibung zu Figur 1 verwiesen.

Anstelle des Kupplungselements 24 ist in dem zweiten Ausführungsbeispiel der Figur 2 ein Sperrelement 25 in dem Versperrelement 2 vorgesehen. Das Sperrelement 25 dient dazu, in einer Sperrposition, die in Figur 2 dargestellt ist, eine Drehung des Zylinderkerns 61 zu dem Zylindergehäuse 60 zu verhindern. In einer nicht dargestellten Freigabeposition lässt das Sperrelement 25 eine Bewegung des Zylinderkerns 61 zu dem Zylindergehäuse 60 zu. Das Zylindergehäuse 61 ist stets drehfest mit dem Entriegelungselement 63 verbunden. Eine Sperreinheit 22 umfasst das Sperrelement 25 und den elektrischen Aktuator 29. Vor einer Verifizierung der Berechtigungsinformation befindet sich das Sperrelement 25 in der Sperrposition. Befindet sich das generische mobile Element 2 in mechanischen Verbindung zu dem Versperrelement 1, so verhindert das Sperrelement 25 in der Sperrposition, dass eine mechanische Drehung des generischen mobilen Elements 2 zu einer Drehung des Entriegelungselements 63 führt. Nach der Verifikation wird das Sperrelement 25 durch den Aktuator 29 in die Freigabeposition bewegt. Nun führt eine mechanische Drehung des generischen mobilen Elements 2 zu einer Drehung des Entriegelungselements 63. Nach einer vorgebenen Zeitspanne oder nach erfolgreichem Entriegeln der Tür wird das Sperrelement 25 erneut in die Sperrposition bewegt. Hierzu beaufschlagt eine nicht dargestellte Feder das Sperrelement 25 in Richtung der Sperrposition. Die Feder wird durch die Energie des generischen mobilen Elements 2 gespannt, entweder durch eine Drehung des Zylinderkerns 61 mittels des generischen mobilen Elements 1 oder durch die elektrische Energie des generischen mobilen Elements 1, wobei der Aktuator 29 zur Spannung der Feder bestromt wird. Der Aktuator 29 kann als ein Solenoid ausgebildet sein.

Im Gegensatz zum Ausführungsbeispiel der Figur 1 umfasst das in der Figur 2 dargestellte Versperrelement 2 keine Antenne. Vielmehr weist das generische mobile Element 2 eine Antenne 15 auf. Das generische mobile Element 2 weist einen weiteres elektrisch leitendes Kontaktelement 47 auf, das mit einem weiteren Kontaktelement 26 des Versperrelements 1 korrespondiert. Über die Kontaktelemente 47, 26 werden Daten, die von der Antenne 15 empfangen wurden zu dem Kontroller 23 geleitet. Hierbei führen nicht dargestellte Leitungen von der Antenne 15 durch den Grundkörper 41 zu dem Kontaktelement 47 und von dem Kontaktelement 26 durch den Zylinderkern 61 zu dem Kontroller 23. Die Daten können insbesondere die Berechtigungsinformation oder einen Teil davon umfassen. Somit dient das generische mobile Element 2 zum Durchleiten zumindest eines Teils der Berechtigungsinformation. Somit kommuniziert das Versperrelement 2 über das generische mobile Element 2 mit dem Berechtigungsinformationsträgerelement 3. Eine Verarbeitung oder eine Speicherung der Berechtigungsinformation in dem generischen mobilen Element 1 ist auch in dem zweiten Ausführungsbeispiel nicht vorgesehen.

Das generische mobile Element 2 umfasst eine Lichtanzeige 17 und/oder einen akustischen Tongeber 46. Das Versperrelement 1, insbesondere der Kontroller 23, kann die Lichtanzeige 17 und/oder den Tongeber 46 ansteuern, um den Zustand des Versperrelements 1 anzuzeigen. Z. B. kann es sich bei dem Zustand des Versperrelements 1 handeln, ob eine Entriegelung der Tür dank des Sperrelements 25 in der Freigabeposition möglich ist oder ob eine Entriegelung der Tür dank des Sperrelements 25 in der Sperrstellung verhindert ist. Die Lichtanzeige 17 und/oder der Tongeber 46 können durch die Energiequelle 4 bestromt werden. Die Ansteuerung durch den Kontroller 23 kann mittels der Kontaktelemente 26, 47 erfolgen.

In einer Modifikation des Ausführungsbeispiels der Figur 2 können die Daten und die Energie über dieselben die Kontaktelemente 21, 45 übertragen werden. Die Kontaktelemente 26, 47 können dann fehlen.

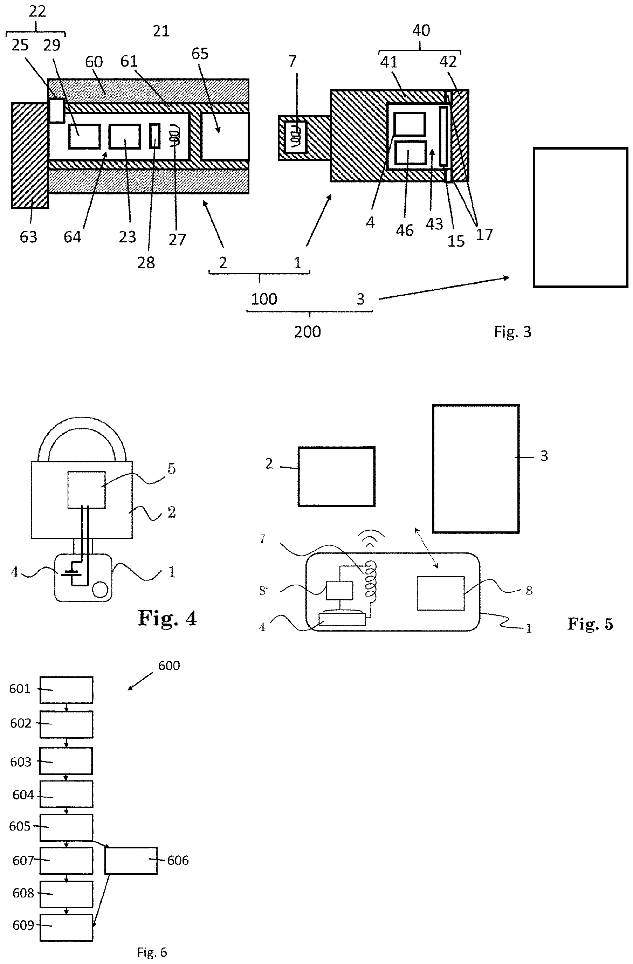

In Figur 3 ist ein drittes Ausführungsbeispiel einer erfindungsgemäßen Schließeinheit 100 und eines erfindungsgemäßen Schließsystems 200 dargestellt. Im Folgenden wird nur auf die Unterschiede zu dem zweiten, in Figur 2 dargestellten Ausführungsbeispiel eingegangen. Im Übrigen wird auf die Beschreibung zu den Figuren 1 und 2 verwiesen. Auch in Figur 3 sind elektrische Leitungen nicht dargestellt.

Die elektrische Energie wird in dem dritten Ausführungsbeispiel induktiv übertragen. Hierzu umfasst das Versperrelement 1 eine erste Spule 27 und das generische mobile Element 2 eine zweite Spule 7. Außerdem werden Daten, insbesondere die Berechtigungsinformation oder zumindest ein Teil der Berechtigungsinformation, über die Spulen 27, 7 von dem generischen mobilen Element 2 auf das Versperrelement 1 übertragen. Die Energie und die Daten werden alternierend auf das Versperrelement 1 übertragen. Hierzu umfasst das Versperrelement 1 einen Energiezwischenspeicher 28, um die von dem generischen mobilen Element 2 empfangene Energie zwischenzuspeichern, um diese Energie dann während der Datenübertragung zu verwenden.

Alternativ können die Daten auf die Energieübertragung aufmoduliert werden. In diesem Fall ist der Energiezwischenspeicher 28 nicht notwendig.

Durch die induktive Energieübertragung kann das erste Formschlussmittel 65 getrennt von dem Hohlraum 64 ausgebildet sein. Hierdurch sind der Kontroller 23 und der Aktuator 29 besonders gut vor Umwelteinflüssen und Manipulationen geschützt.

Figur 6 stellt ein erfindungsgemäßes Verfahren 600 dar. In einem ersten Schritt 601 wird das generische mobile Element der Figur 2 in das Versperrelement 1 der Figur 2 werkzeugfrei eingesteckt. Hierbei wird eine mechanische Verbindung und die elektrischen Kontakte hergestellt. In einem zweiten Schritt 602 wird durch einen elektrischen Strom der Energiequelle 4 der Kontroller 23 bestromt und dadurch eingeschaltet. In einem dritte Schritt 603 steuert der Kontroller 23 die Lichtanzeige an und veranlasst, dass z.B. rotes Licht von der Lichtanzeige 17 emittiert wird. Hierdurch erkennt der Benutzer, dass der Zugang noch nicht gewährt wird, das Verfahren 600 hierzu aber stattfindet. In einem vierten Schritt 604 kommuniziert der Kontroller 23 über die Antenne 15 mit dem Berechtigungsträgerelement 3 und empfängt die Berechtigungsinformation. Der Kontroller 23 überprüft die Berechtigungsinformation in einem fünften Schritt 605 und trifft eine Entscheidung, ob Zugang gewährt werden soll. Wird die Berechtigungsinformation nicht verifiziert, so bleibt in einem Schritt 606 der Zugang verwehrt. In diesem Fall folgt anschließend der letzte Verfahrensschritt 609, indem das generische mobile Element 1 von dem Versperrelement 2 werkzeugfrei abgezogen wird. Wird die Berechtigungsinformation verifiziert, so gewährt der Kontroller 23 Zugang in einem Schritt 607. Hierzu steuert der Kontroller 23 den Aktuator 29 an, der das Sperrelement 25 aus der Sperrposition in die Freigabeposition bewegt. Während der Bewegung des Sperrelements 25 in die Freigabeposition wird durch den Aktuator 29 zugleich eine Feder gespannt, die das Sperrelement 25 in Richtung der Sperrposition beaufschlagt. Der Kontroller 23 steuert zudem die Lichtanzeige 17 an und veranlasst, dass z. B. grünes Licht von der Lichtanzeige 17 emittiert wird. Hierdurch erkennt der Benutzer, dass der Zugang gewährt wird. In einem nachfolgenden Schritt 608 dreht der Benutzer das generische mobile Element 1, wodurch das Drehmoment von dem generischen mobile Element 1 über den Zylinderkern 61 auf das Entriegelungselement 63 übertragen wird. Die Tür kann nun geöffnet werden. In einem letzten Schritt 609 zieht der Benutzer das generische mobile Element 1 werkzeugfrei von dem Versperrelement 2 ab. Hierdurch endet die Bestromung des Versperrelements 1 und das Sperrelement 25 kehrt durch die Feder in die Sperrposition zurück.

Wichtige Aspekte der Figuren 1 bis 3 können wie folgt zusammengefasst werden: Zugang zu einem nicht-dargestellten Objekt ist durch das Versperrelement 2, z.B. durch ein Vorhängeschloss, einen Drehriegelschloss, einen elektromechanischen Beschlag oder einen Schliesszylinder, freigebbar. In Abhängigkeit von einer Verifikation einer Berechtigungsinformation kann Zugang zu dem Objekt gewährt werden. Allerdings setzt die genannte Verifkation voraus, dass das generisches mobiles Element 1 am Ort des Versperrelementes 2 zugegen ist. Beispielsweise muss das generische mobile Element 1 dafür mit dem Versperrelement 2 in Kontakt treten. Der Berechtigungscode ist zuvor nicht im mobilen Element 1 vorhanden.

Zum Beispiel, wie im Ausführungsbeispiel der Figur 1, ist der Berechtigungscode überhaupt niemals im mobilen Element 1 vorhanden. In diesem Fall kann ein Berechtigungsträgerelement mit dem Versperrelement 2 kommunizieren, insbesondere direkt. Die im Berechtigungsträgerelement gespeicherte Berechtigungsinformation kann bei der Verifikation verwendet werden.

Das Vorhandensein des mobilen Elementes 1 am Ort des Versperrelementes 2 kann beispielsweise dadurch sichergestellt werden, dass das Versperrelement 2 über keine ortsfeste Energieversorgung verfügt (wie eine eigene Energiequelle oder einen festen Anschluss an eine vor Ort vorhandene Energiequelle) und mittels des mobilen Elementes 1 (aus einer Energiequelle, z.B. einer wiederaufladbaren Batterie, des mobilen Elementes) mit Energie zu versorgen ist.

Andererseits kann auch vorgesehen sein, dass die Berechtigungsinformation an das mobile Element 1 übertragen wird, wenn dieses am Ort des Versperrelementes 2 zugegen ist, wie in dem Ausführungsbeispiel der Figur 2 gezeigt. In diesem Fall kann das Berechtigungsträgerelement 3, in dem die Berechtigungsinsformation gespeichert ist, mit dem generischen mobilen Element 1 in Kontakt treten, insbesondere direkt, und die im Berechtigungsträgerelement gespeicherte Berechtigungsinformation kann in das mobile Element 1 übertragen werden und dann bei der Verifikation verwendet werden.

Die Verfikation der Berechtigungsinformation kann in dem Versperrelement 2 oder in dem Berechtigungsträgerelement 3 oder verteilt in beiden Elementen, nämlich in dem Versperrelement 2 und in dem Berechtigungsträgerelement 3, durchgeführt werden.

Sofern das Versperrelement 2 über keine Energieversorgung verfügt, kann vorgesehen sein, dass es via mobiles Element 1 mit Energie versorgt wird, drahtgebunden oder drahtlos (z.B. induktiv).

Fig. 4 illustriert schematisch eine Energieversorgung eines Versperrelementes 2 durch ein mobiles Element 1. Das mobile Element 1 beinhaltet eine Energiequelle 4, z.B. eine wiederaufladbare Batterie. Bei einem Miteinander-in-Kontakt-Bringen von mobilem Element 1 und Versperrelement 2 werden galvanische Verbindungen erstellt, über die Schaltkreise 5 des Versperrelementes 2 aus der Energiequelle 4 mit elektrischer Energie versorgt werden. So muss das Versperrelement 2 nicht an eine ortsfeste Energieversorgung angeschlossen sein und braucht insbesondere keine eigene Energiequelle. Dies kann für Anwendungen mit entlegenen und/oder selten besuchten Objekten vor Vorteil sein und zudem ein zusätzliches Sicherheitsmerkmal darstellen.

Die Kommunikation kann drahtgebunden oder auch drahtlos stattfinden.

Das in Fig. 4 symbolisierte Versperrelement 2 ist ein Vorhängeschloss, aber auch andere Versperrelemente wie Drehriegelschlösser oder Schliesszylinder sind vorsehbar.

Fig. 5 illustriert schematisch ein anderes Beispiel für eine Energieversorgung eines Versperrelementes 2 durch ein generisches mobiles Element 1. In diesem Fall wird Energie einer Energiequelle 4 des generischen mobilen Elementes 1 drahltlos, z.B. induktiv, in das Versperrelement 2 übertragen und dort z.B. für die Kommunikation zwischen Versperrelement 2 und mobilem Element 1 verwendet. Entsprechend weist das mobile Element 1 eine Spule 7 für die Energieübertragung auf sowie Schaltkreise 8' zur Steuerung der Energieübertragung. Schaltkreise 8 des generischen mobilen Elementes 1 dienen der Kommunikation zwischen dem generischen mobilen Element 1 und dem Versperrelement 2. Die Kommunikation kann drahtgebunden oder auch drahtlos stattfinden.

Obschon das Versperrelement 2 in Fig. 5 als ein Schliesszylinder symbolisiert ist, sind aber auch andere Versperrelemente wie Drehriegelschlösser oder Vorhängeschlösser vorsehbar.

Im allgemeinen kann also z.B. ein batterieloses Versperrelement vorgesehen werden sowie ein mobiles Element, welches sowohl die Energie für die Elektronik des Versperrelementes zur Verfügungs stellt als auch einer Energieübertragung (mechanische Kraft, z.B. Drehen) zum Öffnen/Schliessen dienen kann. Weiter kann ein Berechtigungsträgerelement (z.B. ein Mobiltelefon oder ein mobiler Rechner) vorgesehen sein, welches eine dem Versperrelement zugeordnete Berechtigungsinformation enthält. Ein Server kann die Berechtigungen (in Form von Berechtigungsinformationen) verwalten und an die Berechtigungsträgerelemente verteilen.

Das mobile Element kann als Schnittstelle zwischen Versperrelement (z.B. Zylinder) und Berechtigungsträgerelement (z.B. Mobiltelefon) fungieren. Es kann eine Energiequelle enthalten und die vom Versperrelement benötigte Energie bereitstellen. Die Öffnungsenergie, die für eine Freigabe aufzuwenden ist, kann mechanisch durch den Nutzer aufgebracht werden, z.B. durch Drehen des mobilen Elementes. Entsprechend muss die Öffnungsenergie dann nicht durch das Versperrelement bzw. elektrische Energie, die dem Versperrelement zur Verfügung steht, aufgebracht werden.

Somit kann es dann ausreichend sein, elektrische Energie des Versperrelementes nur für die Kommunikation und die elektronische Auswertung und allenfalls für die Sperrung und/oder für die Entsperrung oder für den Einkupplungsvorgang und/oder für den Auskupplungsvorgang zu verwenden.

De Kommunikation zwischen Berechtigungsträgerelement und Versperrelement, insbesondere über das generische mobile Element, kann auf Radiokommunikation basieren, z.B. gemäss einem Bluetooth-, RFID- oder Wifi-Standard).

Das generische mobile Element kann so gestaltet sein, dass es für mehrere Versperrelemente einsetzbar ist, also nicht versperrelementspezifisch ist, so dass es bei Verlust einfach ersetzt werden kann (z.B. Lagerware) und praktisch kein Sicherheitsrisiko darstellt.

Es kann vorgesehen sein, dass das mobile Element ist selber kein Token ist, also keine Berechtigungen speichert.

Das Token (in Form einer Berechtigungsinformation) kann vorgängig im Berechtigungsträgerelement gespeichert werden, oder es wird live vom Server über das Berechtigungsträgerelement (und dessen Kommunikationsmöglichkeiten) an das mobile Element und von diesem dann in das Versperrelement übertragen.

Das mobile Element kann eine Nutzerschnittstelle aufweisen, die bspw. einen Tongeber und/oder eine Lichtanzeige und/oder ein Vibrationselement aufweist. Dadurch kann Interaktion mit einem Benutzer vereinfacht oder intuitiver gemacht werden.

Berechtigungen (Berechtigungsinformationen) können im Server definiert und an die entsprechenden Berechtigungsträgerelemente verteilt werden, die dafür typischerweise eine geeignete Applikation ausführen können. Wird das generische mobile Element mit einem Versperrelement in Kontakt gebracht (z.B. in ein Versperrelement gesteckt), wird eine Verbindung zwischen dem mobilen Element und dem Berechtigungsträgerelement aufgebaut. Ist in dem Berechtigungsträgerelement ein dem Versperrelement zugeordneter Berechtigungsinformation vorhanden, kann die Berechtigungsinformation oder nach der Verifikation der Berechtigungsinformation in dem Berechtigungsträgerelement ein Öffnungsbefehl (typischerweise in verschlüsselter Form) an das Versperrelement gesendet werden.

Das Versperrelement und das generische mobile Element können als eine funktionelle Einheit angesehen werden. Es kann vorgesehen sein, dass nur dann eine Kommunikationsverbindung zum Berechtigungsträgerelement aufgebaut werden kann (und somit Zugriff auf die Berechtigungsinformation ermöglicht wird), wenn das generische mobile Element mit dem Versperrelement wirkverbunden ist, insbesondere eine (drahtgebundene oder drahtlose) Kommunikationsverbindung vorhanden ist. Entsprechend kann dies eine Voraussetzung für eine Freigabe bei Vorliegen einer entsprechenden Berechtigung sein.

Es kann vorgesehen sein, dass die elektronische Schaltung des Versperrelementes, die für eine Freigabe benötigt werden, nur mit Energie versorgt werden, wenn das Versperrelement mit dem generischen mobilen Element verbunden ist.

Die Verifikation der Berechtigungsinformation und entsprechend auch der Entscheid über die Freigabe kann im Versperrelement oder im Berechtigungsträgerelement stattfinden. Auch eine Aufteilung des Entscheides ist möglich, z.B. zeitliche Kontrolle (bei Berechtigungsinformationen mit Gültigkeitszeitraum) im Berechtigungsträgerelement und grundsätzliche Berechtigung im Versperrelement.

Ein möglicher Vorteil von Teilen der Erfindung kann sein, dass Berechtigungen jederzeit verteilt und entzogen werden können.

Zudem kann vorgesehen sein, dass das Versperrelement über das Berechtigungsträgerelement mit dem Server kommunizieren kann, live oder zeitversetzt. Hierbei kann der Kommunikationsweg ohne Beteiligung des generischen mobilen Elements entsprechend dem Ausführungsbeispiel der Figur 1 oder unter Durchleitung des generischen mobilen Elements, entsprechend den Ausführungsbeispielen der Figuren 2 oder 3, ausgebildet sein. Somit können z.B. Statusinformationen oder Konfigurationen in die eine oder die andere Richtung übertragen werden. Z.B. können Logging-Daten vom Versperrelement zum Server übertragen werden, live oder zeitversetzt, wobei die Daten im Berechtigungsträgerelement gespeichert und transportiert werden können oder direkt (vor Ort) per Funk übertragen werden.

Dann kann es möglich sein, auf eine zusätzliche Infrastruktur für das Übermitteln von entsprechenden Daten auf den Server zu verzichten. Der Nutzer muss dafür nicht notwendigerweise selber aktiv werden.

Mögliche Anwendungsbereiche für die beschriebenen Verfahren und Schliessysteme sind Aktenschränke, Postfächer, Bankschliessfächer, Tresorfächer, unbemannte technische Einrichtungen wie z.B. Pumpstationen, Verteiler für Strom, Telekommunikation, Gas.

In manchen der genannten Anwendungen, z.B. in Bankkundentresoranlagen, ist das Verhältnis zwischen Versperrelementen und generische mobilen Elementen sehr einseitig: sehr viel mehr Versperrelemente als generische mobile Elemente.

Wenn sich für typischerweise verwendete Berechtigungsträgerelemente wie z.B. Smartphones neue Nahfeldkommunikationstechnologien durchsetzen bzw. ältere Nahfeldkommunikationstechnologien nicht mehr unterstützt werden, kann es von Vorteil sein, wenn die entsprechene neue Technologie nur in den mobilen Elementen neu implementiert werden muss und nicht in allen Versperrelementen. Das kann ein Umrüsten bestehender Schliessysteme vereinfachen und sogar eine benutzerspezifische Anpassung mit vertretbarem Aufwand ermöglichen.

Als Berechtigungsträgerelemente kommen, insbesondere in den obigen Ausführungsbeispielen, Mobiltelefone (insbesondere Smartphones), Tablet-Computer, Laptop-Computer oder andere mobile Kommunikationsgeräte und/oder Rechner in Frage.

Die beschriebenen Merkmale können gemeinsam oder auch einzeln oder in beliebiger Kombination vorteilhaft sein.

## Patentansprüche

1. Verfahren (600) zur Regelung eines Zugangsregimes zu einem Objekt, wobei dem Objekt ein Versperrelement (2) zuordbar ist, wobei durch das Sperrelement (2) ein Zugang zu dem Objekt in Abhängigkeit von einer Verifikation einer elektronischen Berechtigungsinformation freigebbar ist,
wobei eine Voraussetzung für die Freigabe des Zugangs, insbesondere für das Durchführen der Verifikation der elektronischen Berechtigungsinformation, ein Zugegensein eines generischen mobilen Elementes (1) am Ort des Versperrelementes (2) ist, und
wobei die Berechtigungsinformation in einem mobilen Berechtigungsträgerelement (3) enthalten ist, das zusätzlich zu dem Versperrelement (2) und dem generischen mobilen Element (1) am Ort des Versperrelementes (2) zugegen ist und/oder wobei das generische mobile Element (1) die Berechtigungsinformation in einem Zeitraum, der vor dem Zugegensein des generischen mobilen Elementes (1) am Ort des Versperrelementes (2) liegt und an das Zugegensein des generischen mobilen Elementes (1) am Ort des Versperrelementes (2) angrenzt, nicht enthält,
**dadurch gekennzeichnet, dass** das Verfahren (600) die folgenden Schritte umfasst:
a. Miteinander-in-Kontakt-Treten des Versperrelements (2) mit dem generischen mobilen Element (1)
b. anschließende Durchführung der Verifikation der Berechtigungsinformation, wozu eine bevorzugt kabellose Kommunikation zwischen dem Versperrelement (2) und dem mobilen Berechtigungsträgerelement (3) stattfindet.

2. Verfahren (600) gemäss Anspruch 1, wobei das generische mobile Element (1) eine Energiequelle (4) aufweist, und wobei das Versperrelement (2) durch das generische mobile Element (1) mit Energie aus der Energiequelle versorgt wird, wobei die Energiequelle dem Versperrelement (2) ausreichende Energie zur Durchführung der Verifikation der Berechtigungsinformation und/oder für einen elektrischen Aktuator (29) des Versperrelements (2) zur Verfügung stellt, wobei insbesondere die Energiequelle (49 in einem mit einem Deckel (42) verschließbaren Fach (43) des generischen mobilen Elements (1) austauschbar angeordnet ist.

3. Verfahren (600) gemäss einem der vorhergehenden Ansprüche, wobei eine Voraussetzung für das Durchführen der Verifikation der Berechtigungsinformation ein Miteinander-in-Kontakt-Treten des Versperrelementes (2) mit dem generischen mobilen Element (1) ist, insbesondere wobei das generische mobile Element (1) die Berechtigungsinformation vor dem Miteinander-in-Kontakt-Treten des Versperrelementes (2) mit dem generischen mobilen Element (1) nicht enthält.

4. Verfahren (600) nach einem der vorhergehenden Ansprüche, wobei das Miteinander-in-Kontakt-Treten das Bewirken der mechanischen Verbindung und/oder das Erstellen einer elektrischen Wirkverbindung beinhaltet.

5. Verfahren (600) nach einem der vorhergehenden Ansprüche, wobei durch das Miteinander-in-Kontakt-Treten des Versperrelements (2) mit dem generischen mobilen Element (1) das generische Element (1) beginnt, das Versperrelement mit elektrischer Energie zu versorgen, und eine elektronische Schaltung (23), insbesondere ein Prozessor oder ein Kontroller, des Versperrelements (2) eingeschaltet wird, insbesondere um eine Kommunikation zur Verifikation der Berechtigungsinformation durchzuführen.

6. Verfahren (600) nach einem der vorhergehenden Ansprüche, wobei insbesondere im Schritt b. die Kommunikation zwischen dem Versperrelement (2) und dem Berechtigungsträgerelement (3) zur Durchführung der Verifikation der Berechtigungsinformation ohne Einbeziehung des generischen mobilen Elements (1) oder unter Benutzung des generischen mobilen Elements (1) nur als Überträger erfolgt.

7. Verfahren (600) nach einem der vorhergehenden Ansprüche, wobei die Energiequelle (4) insbesondere fortlaufend während der Durchführung der Verifikation der Berechtigungsinformation und/oder während der Bestromung des Aktuator (29) das Versperrelement (2) bestromt, wobei insbesondere das Versperrelement (2) keine Verbindung zu einer ortsfesten elekrischen Energieversorgung aufweist, und insbesondere keine eigene elektrische Energieversorgung aufweist.

8. Verfahren (600) gemäß einem der vorhergehenden Ansprüche, wobei das Versperrelement (2) eine erste Energieübertragungseinrichtung (21, 27), insbesondere ein erstes Kontaktelement (21) oder eine erste Spule (27), zur Energieübertragung von dem generischen mobilen Element (2) umfasst, wobei für den Fall, dass über die erste Energieübertragungseinrichtung (21, 27) des Versperrelements (2) kein elektrischer Strom fließt, das Versperrelement (2) jegliche Kommunikation zur Durchführung der Verifikation der Berechtigungsinformation, insbesondere die Aussendung eines Detektionssignals, unterlässt, insbesondere dass die elektronische Schaltung (23) ausgeschaltet ist.

9. Verfahren (600) gemäß einem der vorhergehenden Ansprüche, dass das Versperrelement (2) ein erstes mechanisches Verbindungsmittel (65), insbesondere Formschlussmittel, und das generische mobile Element (1) ein dazu korrespondierendes zweites mechanisches Verbindungsmittel (44), insbesondere Formschlussmittel, umfasst, so dass eine mechanische Verbindung, insbesondere einen Formschluss, durch das Versperrelement (2) und das generische mobile Element (1) eingehbar ist, wobei ein Entriegelungselement (63) des Versperrelements (2) mittels der mechanischen Verbindung zwischen dem generischen mobilen Element (1) und dem Versperrelement (2) in eine Entriegelungsposition bewegbar ist, wobei insbesondere das Herstellen der Wirkverbindung zwischen dem ersten und dem zweiten mechanischen Verbindungsmittel (44, 65) einflussfrei auf eine Beweglichkeit des ersten mechanischen Verbindungsmittels (65) ist.

10. Verfahren (600) gemäß einem der vorhergehenden Ansprüche, wobei das generische mobile Element (1) eine Antenne (15) umfasst, über die die elektronische Schaltung (23) des Versperrelements (2) mit dem Berechtigungsträgerelement kommuniziert, insbesondere dass das Versperrelement (2) frei von einer Antenne zur Kommunikation mit dem Berechtigungsträgerelement (3) ausgebildet ist, insbesondere dass die erste Energieübertragungseinrichtung (21, 27) zugleich als Überträger der Berechtigungsinformation fungiert.

11. Verfahren (600) gemäß einem der vorhergehenden Ansprüche, wobei das generische mobile Element (1) frei von einer Antenne zur Kommunikation mit dem Berechtigungsträgerelement (3) und/oder dem Versperrelement (2) ausgebildet ist und/oder wobei über die erste Energieübertragungsvorrichtung (21, 27) keine Daten, insbesondere keine Berechtigungsinformation, übertragen werden.

12. Verfahren (600) gemäß einem der vorhergehenden Ansprüche, wobei das generische mobile Element (1) eine Lichtanzeige (17) umfasst und das Versperrelement die Lichtanzeige (17) ansteuert.

13. Verfahren (600) nach einem der vorhergehenden Ansprüche, **dadurch gekennzeichnet, dass** das generische mobile Element (1) dem Versperrelement (2) ausreichende Energie, insbesondere elektrische Energie, zur Verfügung stellt, um zu veranlassen, dass, nachdem der Aktuator (29) des Versperrelements (2) eine Bewegung des Entriegelungselements (63) durch das generische mobile Element (1) ermöglicht hat, eine Betätigung des generischen mobilen Elements (1) erneut wirkungsfrei auf die Bewegung des Entriegelungselements (63) ist, wobei insbesondere hierzu durch die Energie des generischen mobilen Elements (1) eine Feder gespannt wird oder der elektrische Aktuator (29) bestromt wird.

14. Schließeinheit (100) mit einem Versperrelement (2) und mit einem generischen mobilen Element (1),
wobei durch das Versperrelement (1) ein Zugang zu einem Objekt, dem das Versperrelement (1) zugeordnet ist, in Abhängigkeit von einer Verifikation einer Berechtigungsinformation freigebbar ist,
wobei das Versperrelement (1) eine elektronische Schaltung (23), insbesondere einen Prozessor oder einen Kontroller, zur Kommunikation mit einem mobilen Berechtigungsträgerelement (3) umfasst,
wobei die Schließeinheit (100) so ausgelegt ist, dass eine Freigabe des Zugangs, insbesondere ein Durchführen der Verifikation der Berechtigungsinformation, zur Bedingung hat, dass das generische mobile Element (1) am Ort des Versperrelementes (2) zugegen ist und die elektronische Schaltung (23) an einer Kommunikation zum Durchführen der Verifikation der Berechtigungsinformation mit dem Berechtigungsträgerelement (3) teilnimmt, wobei mit der Schließeinheit das Verfahren nach einem der Ansprüche 1 bis 13 ausgeführt wird.

15. Elektronisches Schließsystem (200) mit einem Versperrelement (2), mit einem generischen mobilen Element (1) und mit einem mobilen Berechtigungsträgerelement (3), wobei durch das Versperrelement (2) ein Zugang zu einem Objekt, dem das Versperrelement (2) zugeordnet ist, in Abhängigkeit von einer Verifikation einer Berechtigungsinformation freigebbar ist,
wobei das Berechtigungsträgerelement (3) die Berechtigungsinformation enthält,
wobei das Schließsystem (200) so ausgelegt ist, dass eine Freigabe des Zugangs, insbesondere ein Durchführen der Verifikation der Berechtigungsinformation, zur Bedingung hat, dass das generische mobile Element (1) und das Berechtigungsträgerelement (3) am Ort des Versperrelementes (2) zugegen ist, wobei das elektronische Schließsystem die Schließeinheit nach Anspruch 14 und das Berechtigungsträgerelement umfasst.

## Claims

1. A method (600) for regulating an access regime to an object, wherein a blocking element (2) can be associated to the object, wherein the blocking element (2) can release an access to the object depending on a verification of an electronic authorization information, wherein, in particular for performing the verification of the electronic authorization information, a precondition for releasing the access is a presence of a generic mobile element (1) at the location of the blocking element (2), and
wherein the authorization information is contained in a mobile authorization carrier element (3), which additionally to the blocking element (2) and to the generic mobile element (1) is present at the location of the blocking element (2) and/or wherein the generic mobile element (1) does not contain the authorization information in a period of time, which is prior to the presence of the generic mobile element (1) at the location of the blocking element (2) and borders the presence of the generic mobile element (1) at the location of the blocking element (2),
**characterized in that** the method (600) comprises the following steps:
a. the blocking element (2) and the generic mobile element (1) entering in contact with each other,
b. subsequently performing the verification of the authorization information, whereby preferably cableless communication occurs between the blocking element (2) and the mobile authorization carrier element (3).

2. The method (600) according to claim 1, wherein the generic mobile element (1) has an energy source (4), and wherein the generic mobile element (1) supplies energy from the energy source to the blocking element (2), wherein the energy source provides sufficient energy to the blocking element (2) for performing the verification of the authorization information and/or for an electric actuator (29) of the blocking element (2), wherein in particular the energy source (4) is disposed exchangeably in a compartment (43), which is closable with a cover (42), of the generic mobile element (1).

3. The method (600) according to any of the preceding claims, wherein a precondition for performing the verification of the authorization information is the blocking element (2) and the generic mobile element (1) entering in contact with each other, in particular wherein the generic mobile element (1) does not contain the authorization information prior to the blocking element (2) and the generic mobile element (1) entering in contact with each other.

4. The method (600) according to any of the preceding claims, wherein entering in contact with each other contains realizing the mechanical connection and/or establishing an electric operative connection.

5. The method (600) according to any of the preceding claims, wherein, the blocking element (2) and the generic mobile element (1) entering in contact with each other, the generic element (1) starts supplying electric energy to the blocking element, and an electronic circuit (23) being switched-on, in particular a processor or a controller, of the blocking element (2), in particular for performing a communication for the verification of the authorization information.

6. The method (600) according to any of the preceding claims, wherein in particular in step b. the communication between the blocking element (2) and the authorization carrier element (3) for performing the verification of the authorization information is realized without soliciting the generic mobile element (1) or while employing the generic mobile element (1) only as a transmitter.

7. The method (600) according to any of the preceding claims, wherein the energy source (4) energizes the blocking element (2), in particular ongoing while performing the verification of the authorization information and/or while energizing the actuator (29) of the blocking element (2), wherein in particular the blocking element (2) does not have a connection to a stationary electric energy supply, and in particular does not have its own electric energy supply.

8. The method (600) according to any of the preceding claims, wherein the blocking element (2) comprises a first energy transfer device (21, 27), in particular a first contact element (21) or a first coil (27), for transferring energy from the generic mobile element (1), wherein, in case no electric current flows via the first energy transfer device (21, 27) of the blocking element (2), the blocking element (2) ceases any communication for performing the verification of the authorization information, in particular sending out a detection signal, in particular that the electronic circuit (23) is switched off.

9. The method (600) according to any of the preceding claims, wherein the blocking element (2) comprises a first mechanical connecting means (65), in particular form closure means, and the generic mobile element (1) comprises a second mechanical connecting means (44) corresponding thereto, in particular form closure means, so that the blocking element (2) and the generic mobile element (1) can establish a mechanical connection, in particular a form closure, and wherein an unlocking element (63) of the blocking element (2) is movable to an unlocking position by means of the mechanical connection between the generic mobile element (1) and the blocking element (2), wherein in particular establishing the operative connection between the first and the second mechanical connecting means (44, 65) has no influence on a mobility of the first mechanical connecting means (65).

10. The method (600) according to any of the preceding claims, wherein the generic mobile element (1) comprises an antenna (15), via which the electronic circuit (23) of the blocking element (2) communicates with the authorization carrier element, in particular in that the blocking element (2) is formed free from an antenna for communication with the authorization carrier element (3), in particular in that the first energy transfer device (21, 27) simultaneously acts as a transmitter of the authorization information.

11. The method (600) according to any of the preceding claims, wherein the generic mobile element (1) is formed free from an antenna for communication with the authorization carrier element (3) and/or the blocking element (2), and/or wherein no data, in particular no authorization information is transmitted via the first energy transfer device (21, 27).

12. The method (600) according to any of the preceding claims, wherein the generic mobile element (1) comprises a light display (17) and the blocking element controls the light display (17).

13. The method (600) according to any of the preceding claims, **characterized in that** the generic mobile element (1) supplies sufficient energy to the blocking element (2), in particular electric energy, for causing that an actuation of the generic mobile element (1) is again without effect on the movement of the unlocking element (63), after the actuator (29) of the blocking element (2) has enabled a movement of the unlocking element (63) by means of the generic mobile element (1), wherein, in particular for this purpose, the energy of the generic mobile element (1) tensions a spring or energizes the electric actuator (29).

14. A locking unit (100) with a blocking element (2) and with a generic mobile element (1),
wherein the blocking element (2) is able to release an access to an object, to which the blocking element (2) is associated, depending on a verification of the authorization information,
wherein the blocking element (2) comprises an electronic circuit (23), in particular a processor or a controller, for communicating with a mobile authorization carrier element (3),
wherein the locking unit (100) is specified so that a release of the access, in particular performing the verification of the authorization information, has the condition that the generic mobile element (1) is present at the location of the blocking element (2) and the electronic circuit (23) participates in a communication for performing the verification of the authorization information with the authorization carrier element (3), wherein the locking unit performs the method according to any of the claims 1 to 13.

15. An electronic locking system (200) with a blocking element (2), with a generic mobile element (1) and with a mobile authorization carrier element (3), wherein the blocking element (2) is able to release an access to an object, to which the blocking element (2) is associated, depending on a verification of the authorization information,
wherein the authorization carrier element (3) contains the authorization information,
wherein the locking system (200) is specified in that a release of the access, in particular performing the verification of the authorization information, has the condition that the generic mobile element (1) and the authorization carrier element (3) are present at the location of the blocking element (2), wherein the electronic locking system comprises the locking unit according to claim 14 and the authorization carrier element.

## Revendications

1. Méthode (600) pour réguler un régime d'accès à un objet, un élément de blocage (2) pouvant être associé à l'objet, l'élément de blocage (2) pouvant libérer un accès à l'objet en fonction d'une vérification de renseignement d'autorisation électronique,
une précondition pour la libération de l'accès, tout particulièrement pour exécuter la vérification de renseignement d'autorisation électronique, étant une présence d'un élément mobile générique (1) à l'endroit de l'élément de blocage (2), et
le renseignement d'autorisation étant contenu dans un élément porteur d'autorisation (3) mobile, qui est présent en plus de l'élément de blocage (2) et de l'élément mobile générique (1) à l'endroit de l'élément de blocage (2) et/ou l'élément mobile générique (1) ne contenant pas le renseignement d'autorisation dans une période, qui est avant la présence de l'élément mobile générique (1) à l'endroit de l'élément de blocage (2) et se situe près de la présence de l'élément mobile générique (1) à l'endroit de l'élément de blocage (2),
**caractérisée en ce que** la méthode (600) comporte les étapes suivantes :
a. l'élément de blocage (2) et l'élément mobile générique (1) entrant en contact l'un avec l'autre,
b. ensuite exécuter la vérification de renseignement d'autorisation électronique, à cet effet de préférence une communication sans fil étant établie entre l'élément de blocage (2) et l'élément mobile porteur d'autorisation (3).

2. Méthode (600) selon la revendication 1, l'élément mobile générique (1) ayant une source d'énergie (4), et l'élément de blocage (2) étant alimenté en énergie à partir de la source d'énergie par l'élément mobile générique (1), la source d'énergie mettant suffisamment d'énergie à disposition de l'élément de blocage (2) pour exécuter la vérification de renseignement d'autorisation et/ou pour un actionneur électrique (29) de l'élément de blocage (2), tout particulièrement la source d'énergie (4) étant agencée de façon échangeable dans un compartiment (43), qui est obturable par un couvercle (42), de l'élément mobile générique (1).

3. Méthode (600) selon l'une des revendications précédentes, une précondition pour exécuter la vérification de renseignement d'autorisation étant que l'élément de blocage (2) et l'élément mobile générique (1) entrant en contact l'un avec l'autre, tout particulièrement l'élément mobile générique (1) ne contenant pas le renseignement d'autorisation avant l'élément de blocage (2) entrant en contact avec l'élément mobile générique (1).

4. Méthode (600) selon l'une des revendications précédentes, entrant en contact l'un avec l'autre incluant effectuer la connexion mécanique et/ou établissant une connexion opérationnelle électrique.

5. Méthode (600) selon l'une des revendications précédentes, comme l'élément de blocage (2) et l'élément mobile générique (1) entrent en contact l'un avec l'autre, l'élément mobile générique (1) commençant à alimenter l'élément de blocage en énergie électrique, et un circuit électronique (23), tout particulièrement un processeur ou contrôleur, de l'élément de blocage (2) étant mis en marche, tout particulièrement pour exécuter une communication pour vérifier le renseignement d'autorisation.

6. Méthode (600) selon l'une des revendications précédentes, tout particulièrement en l'étape b. la communication entre l'élément de blocage (2) et l'élément porteur d'autorisation (3) pour exécuter la vérification de renseignement d'autorisation se faisant sans prenant en compte l'élément mobile générique (1) ou en utilisant l'élément mobile générique (1) seulement comme translateur.

7. Méthode (600) selon l'une des revendications précédentes, la source d'énergie (4) mettant sous tension l'élément de blocage (2), tout particulièrement en continue pendant l'exécution de la vérification de renseignement d'autorisation et/ou pendant la mise sous tension de l'actionneur (29), tout particulièrement l'élément de blocage (2) n'ayant pas de connexion à une alimentation en énergie électrique stationnaire, et tout particulièrement n'ayant pas sa propre alimentation en énergie électrique.

8. Méthode (600) selon l'une des revendications précédentes, l'élément de blocage (2) comportant un premier dispositif de transfert d'énergie (21, 27), tout particulièrement un premier élément de contact (21) ou une première bobine (27), pour transférer l'énergie de l'élément mobile générique (1), au cas où aucun courant électrique ne coulerait par le premier dispositif de transfert d'énergie (21, 27) de l'élément de blocage (2), l'élément de blocage (2) cessant toute communication pour exécuter la vérification de renseignement d'autorisation, tout particulièrement l'émission d'un signal de détection, tout particulièrement que le circuit électronique (23) étant désactivé.

9. Méthode (600) selon l'une des revendications précédentes, l'élément de blocage (2) comportant un premier moyen de connexion mécanique (65), tout particulièrement moyen de liaison par la forme, et l'élément mobile générique (1) comportant un deuxième moyen de connexion mécanique (44) y correspondant, tout particulièrement moyen de liaison par la forme, de sorte qu'une connexion mécanique, tout particulièrement liaison par la forme, puisse être établie par l'élément de blocage (2) et l'élément mobile générique (1), un élément de déverrouillage (63) de l'élément de blocage (2) étant déplaçable au moyen de la connexion mécanique entre l'élément mobile générique (1) et l'élément de blocage (2) en une position de déverrouillage, tout particulièrement établissant la connexion opérationnelle entre le premier et le deuxième moyen de connexion mécanique (44, 65) étant sans conséquence sur une mobilité du premier moyen de connexion mécanique (65).

10. Méthode (600) selon l'une des revendications précédentes, l'élément mobile générique (1) comportant une antenne (15), par laquelle le circuit électronique (23) de l'élément de blocage (2) communique avec l'élément porteur d'autorisation, tout particulièrement que l'élément de blocage (2) étant aménagé sans une antenne pour la communication avec l'élément porteur d'autorisation (3), tout particulièrement que le premier dispositif de transfert d'énergie (21, 27) agissant en même temps comme translateur du renseignement d'autorisation.

11. Méthode (600) selon l'une des revendications précédentes, l'élément mobile générique (1) étant aménagé sans antenne pour la communication avec l'élément porteur d'autorisation (3) et/ou avec l'élément de blocage (2), et/ou aucunes données, tout particulièrement aucun renseignement d'autorisation, n'étant transférés par le premier dispositif de transfert d'énergie (21, 27).

12. Méthode (600) selon l'une des revendications précédentes, l'élément mobile générique (1) comportant un affichage lumineux (17) et l'élément de blocage excitant l'affichage lumineux (17).

13. Méthode (600) selon l'une des revendications précédentes, **caractérisée en ce que** l'élément mobile générique (1) mettant suffisamment d'énergie à disposition de l'élément de blocage (2), tout particulièrement d'énergie électrique, pour causer qu'un actionnement de l'élément mobile générique (1) est de nouveaux sans effet pour le mouvement de l'élément de déverrouillage (63), après l'actionneur (29) de l'élément de blocage (2) ayant permis un mouvement de l'élément de déverrouillage (63) par l'élément mobile générique (1), tout particulièrement pour ce faire l'énergie de l'élément mobile générique (1) mettant un ressort en tension ou mettant sous tension l'actionneur électrique (29).

14. Unité de fermeture (100) avec un élément de verrouillage (2) et avec un élément mobile générique (1),
l'accès à un objet, auquel l'élément de blocage (2) est associé, étant libérable par l'élément de blocage (2) en fonction d'une vérification de renseignement d'autorisation,
l'élément de blocage (2) comportant un circuit électronique (23), tout particulièrement un processeur ou un contrôleur, pour communiquer avec un élément porteur d'autorisation (3) mobile,
l'unité de fermeture (100) étant conçue de sorte qu'une libération de l'accès, tout particulièrement exécuter la vérification de renseignement d'autorisation, a comme condition que l'élément mobile générique (1) est présent à l'endroit de l'élément de blocage (2) et le circuit électronique (23) participe à une communication pour exécuter la vérification de renseignement d'autorisation avec l'élément porteur d'autorisation (3), l'unité de fermeture exécutant la méthode selon l'une des revendications 1 à 13.

15. Système de fermeture électronique (200) avec un élément de blocage (2), avec un élément mobile générique (1) et avec un élément porteur d'autorisation (3), l'accès à un objet, auquel l'élément de blocage (2) est associé, étant libérable par l'élément de blocage (2) en fonction d'une vérification de renseignement d'autorisation,
l'élément porteur d'autorisation (3) contenant le renseignement d'autorisation,
le système de fermeture (200) étant conçu de sorte que la libération de l'accès, tout particulièrement exécuter la vérification de renseignement d'autorisation, a comme condition que l'élément mobile générique (1) et l'élément porteur d'autorisation (3) sont présents à l'endroit de l'élément de blocage (2), le système de fermeture électronique comportant l'unité de fermeture selon la revendication 14 et l'élément porteur d'autorisation.
